# EUROPEAN PATENT SPECIFICATION

(11) **EP 2 418 934 B1**
(45) Date of publication and mention of the grant of the patent: **21.01.2015**
(21) Application number: 10714163.2
(22) Date of filing: 13.04.2010
(51) Int. Cl.: A01J 25/06

(54) **A CUTTING FRAME HAVING EXCHANGEABLE KNIVES, CUTTING DEVICE AND CURD VAT WITH SUCH A CUTTING FRAME**
SCHNEIDRAHMEN MIT AUSTAUSCHBAREN MESSERN, SCHNEIDVORRICHTUNG UND KÄSEFERTIGER MIT EINEM SOLCHEN SCHNEIDRAHMEN
CADRE DE DÉCOUPE À LAMES AMOVIBLES, DISPOSITIF DE DÉCOUPE ET CUVE POUR LE CAILLÉ AVEC UN TEL CADRE DE DÉCOUPE

(30) Priority: 15.04.2009 DK 200970001
(43) Date of publication of application: 22.02.2012
(73) Proprietor: Tetra Laval Holdings & Finance S.A., 1009 Pully (CH)
(72) Inventor: HYLDBORG, Henrik, DK-8210 Århus V (DK)
(74) Representative: Patentgruppen
(86) International application number: PCT/DK2010/000043
(87) International publication number: WO 2010/118746

(56) References cited:
- EP-A1- 1 428 429
- CH-A5- 676 777
- US-A1- 2006 081 133

## Description

### Technical field of the invention

The present invention relates in a first aspect to a cutting frame for use in a curd vat and in a second aspect to a cutting device comprising such a cutting frame. In a third aspect the present invention relates to a curd vat comprising a cutting frame or a cutting device according to the invention and in a fourth aspect the present invention relates to the use of a cutting frame according the invention or a cutting device according to the invention, or a curd vat according to the invention in a cheese manufacturing process.

### Background of the invention

The invention relates to improvements in apparatuses for cutting and stirring curd in a cheese manufacturing process. Such apparatuses are known in the art of cheese making, and one type of such apparatuses comprises a tank in which a rotatable shaft is situated which carries cutting frames extending radially from the shaft, which cutting frames are mounted on the shaft in staggered relation. The cutting frames each comprise two spaced-apart parallel frame girders, which are mounted by one end on the rotatable shaft and whose other end extends to a point near the wall of the tank. The tank can be arranged horizontally or vertically, the rotatable shaft then being likewise horizontal or vertical. In the above-mentioned types of apparatuses for curd stirring/cutting, the two frame girders having arranged between them in a direction substantially perpendicular to these frame girders, an array of knives being fixed to the frame girder.

Essentially all known apparatuses are arranged for stirring and cutting curd which has formed in the tank in that the tank has been filled with milk to which starter and rennet have been added. To that end, the central shaft is driven for rotation, so that the cutting frames move through the curd formed. The cutting frames are usually designed such that the knives and the frame girders form a cutting edge along one edge and are blunt and rounded off along the other edge. Accordingly, rotation of the central shaft(s) in one direction substantially implies a cutting action, while rotation in the other direction substantially implies a stirring action.

An apparatus of the above type is disclosed in for example US 4 108 058. Another alternative of such an apparatus is disclosed in US 4 989 504.

In the above-mentioned types of apparatuses the knives are welded onto the frame girders of the cutting frame. This solution provides for a sturdy and strong construction. However, the presence of a high number of knives in the cutting frame implies that a corresponding high number of welds have to be made. Furthermore, due to the use of such a cutting frames in the manufacture of food for human consumption, legislations in most countries provide for regulations requiring that all such welds be polished due to hygienic concerns.

Accordingly, the high number of welds to be made and the subsequently necessary step of polishing such welds make the manufacturing of such cutting frames labour heavy and thus make the cutting frame expensive.

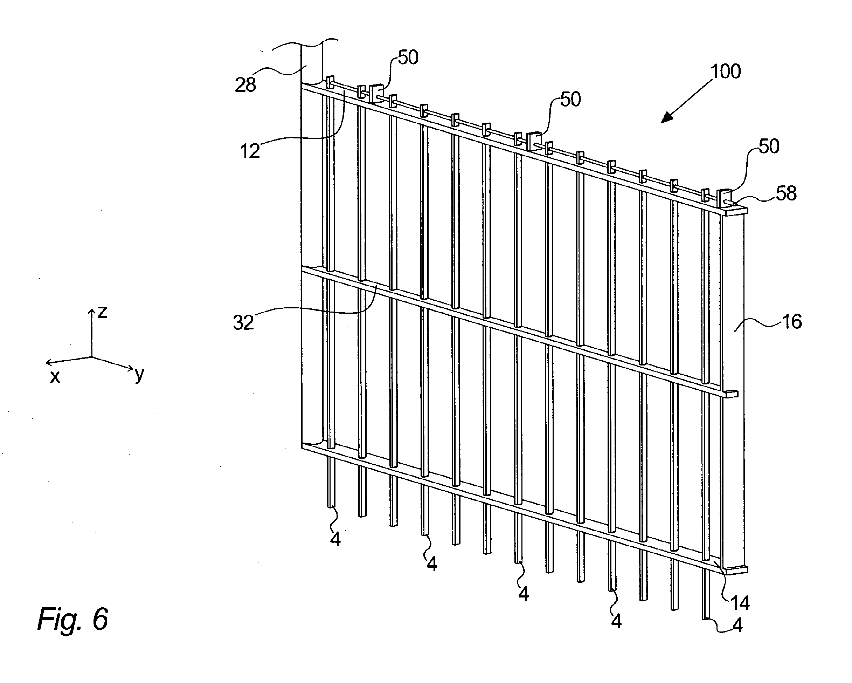

In EP 1 084 609 A1 is disclosed a solution of this problem. EP 1 084 609 A1 discloses a cutting frame for use in a curd vat. This cutting frame comprises two spaced-apart parallel frame girders, which are mounted on a rotatable shaft. Instead of being welded onto the frame girders, the knives are accommodated in sets of inline-arranged openings in these frame girders, wherein they are locked into position by a pin penetrating holes in the knives. Hence, by having the knives accommodated in openings in the frame girders of the cutting frame and having the knives locked into such positions, a huge amount of labour work can be avoided in the manufacture of such a cutting frame because all previously necessary welding of the knives to the frame girders and subsequently polishing of such welds can be completely avoided. In one embodiment of EP 1 084 609 A1 the cutting frame comprises (see Fig. 6 of EP 1 084 609 A1) a drive shaft onto which is mounted two frame girders each having two opposite axial ends; said frame girders being arranged essentially perpendicular to said drive shaft. Between the frame girders and fixed thereto are a number of transverse knives (item 32 of Fig. 6) having openings for accommodating a number of longitudinal knives (item 38 of Fig. 6). These longitudinal knives are locked onto the cutting frame by a pin (item 47 of Fig. 6), which may be releasable or which may be unreleasable. In Fig. 6 of EP 1 084 609 A1 the longitudinal knives are U-shaped knives being inserted into the openings of transverse knives by moving the knives in a direction parallel to the frame girders into the openings of the transverse knives. Once in place the, the longitudinal knives are locked by the locking pin. This locking pin is positioned approximately halfway of the radial extension of the cutting frame from the drive shaft.

It has been found that when one curd vat is used for the manufacture of different types of cheeses, it may be very advantageous to be able to alter the configuration of the knives of the cutting frame when going from the manufacture of one specific type of cheese to another specific type of cheese. By the term "the configuration of the knives of the cutting frame" is meant the number of longitudinal knives as well as the distribution or density of the knives at various positions alongside the frame girders. Such advantages are as mentioned above especially relevant when the same curd vat is used for the manufacture of different types of cheeses.

The advantages in being able to make such altered configurations are that it has been found that optimum configurations exist in respect of each of the different type of cheeses to be manufactured. The optimisation resides in that it has been found that the loss of cheese curd in the form of fines can be reduced by selecting a specific configuration of the knives of the cutting frame (i.e. a specific number of longitudinal knives as well as the distribution or density of the knives at various position alongside the frame girders) corresponding to the specific type of cheese being made. The same applies in respect of optimisation in relation to reducing loss of fat into the whey.

In the embodiments shown in Fig. 6 of EP 1 084 609 A1, when the cutting frame has been mounted on the drive shaft, there is no possibility to change the configuration (i.e. number of longitudinal knives and position thereof) of all the longitudinal knives arranged near the driveshaft. This is a consequence of the fact that the openings in the transverse knives only allow for movement of the longitudinal knives located in the driveshaft end of the cutting frame in a direction parallel to the frame girders and not in a direction perpendicular thereto. Hence, when the cutting frame has been mounted onto the driveshaft, the driveshaft itself prevents a movement of these longitudinal knives in a direction parallel to the frame girders in a distance large enough to release these longitudinal knives from the transverse knives because the driveshaft literally stands in the way for such a movement.

Although EP 1 084 609 A1 gives one example of a cutting frame which allows for some flexibility as to the configuration of the longitudinal knives of the cutting frame (cf. the embodiment shown in Fig. 6 of EP 1 084 609 A1) in which those U-shaped longitudinal knives arranged at the opposite end of the drive shaft are releasable, the advantages of being able to fully determine the number of longitudinal knives as well as the distribution or density of said knives at various position alongside the frame girders after the mounting of the driveshaft and after the cutting frame has been arranged inside the curd vat was not addressed in EP 1 084 609 A1.

Accordingly, there exists a need in the art of cheese making for a curd vat having a cutting frame which - when the cutting frame is mounted onto the drive shaft and is arranged inside the curd vat - allows a full flexibility as to altering the configuration as to the number and positions of the longitudinal knives.

CH 676 777 A5 discloses a harp-like cutter for cutting thickened gelatinuous substances particularly during cheese making. It has a frame with tensioned strings, which are strip like and taper on their two longitudinal side(s). Guide(s) are provided in the frame for the strings. The guide is formed by a support fixed across the longitudinal direction of the strings in the frame and having slits for passing through the strings.

### Brief description of the invention

This need has been fulfilled by the cutting frame according to claim 1, by a cutting device according to claim 10, by a curd vat according claim 12, and by a use according to claim 15.

### The cutting frame according to the first aspect of the present invention

The present invention relates in a first aspect to a cutting frame according to claim 1.

The cutting frame according to the first aspect of the present invention provides for full flexibility as to changing altering the number of exchangeable longitudinal knives as well as the distribution and/or density and/or positions of said knives at various positions alongside the frame girders even when the frame girder is arranged inside a curd vat. This flexibility will allow the change of the configuration (i.e. number of knives as well as position of knives) in correspondence with the optimum configuration in respect of the actual cheese type which is to be made. This change is possible even when the frame girder is arranged inside the curd vat.

By having a cutting frame which enables the above flexibility as to altering the number of exchangeable longitudinal knives as well as the distribution or density of said knives at various positions alongside the frame girders a bonus effect is furthermore encountered. This bonus effect resides in the fact that during prolonged use, the longitudinal knives will become more and more blunt at their cutting edge. Such blunted cutting edges will obviously affect performance of the cutting action in a negative way and result in much more fines than desirable being produced.

By providing a curd vat comprising a cutting frame according to the first aspect of the present invention it is possible to dismantle all the exchangeable longitudinal knives from their respective accommodation openings in the transverse frame girders with a view to re-sharpening said knives. This dismantling of the exchangeable longitudinal knives is possible even when the cutting frame is arranged inside the curd vat itself.

Hence, the cutting frame according to the first aspect of the present invention allows for easy re-sharpening of the exchangeable longitudinal knives of the cutting frame because the knives may be dismantled from the cutting frame and be removed from the curd vat. It is self-evident that the re-sharpening process of the exchangeable longitudinal knives is much easier when these knives are dismantled from the curd vat.

The present invention relates in a second aspect to a cutting device 100 for use in a curd vat, said cutting device comprising one or more cutting frames 2 according to the first aspect of the present invention; said cutting device further comprising a drive shaft 28; wherein said one or more cutting frames being fixed to said drive shaft.

The present invention relates in a third aspect to a curd vat comprising a cutting frame according to the first aspect of the present invention and/or comprising a cutting device according to the second aspect of the present invention.

The present invention relates in a fourth aspect to the use of a cutting frame according to the first aspect of the present invention or a cutting device according to the second aspect of the present invention or a curd vat according to the third aspect of the present invention in a cheese manufacturing process.

Experiments have shown that compared to prior art curd vats having a fixed configuration of cutting knives, improvements in the manufacture of a cheese curd as expressed in reduction of fines lost to the whey of up to 20 % can be obtained by the curd vat according to the third aspect of the present invention which allows for full flexibility as to optimising the specific configuration of the exchangeable longitudinal knives.

Experiments have shown that compared to prior art curd vats having a fixed configuration of cutting knives, improvements in the manufacture of a cheese curd as expressed in reduction of fat lost to the whey of up to 10 % can be obtained by the curd vat according to the third aspect of the present invention which allows for full flexibility as to optimising the specific configuration of the exchangeable longitudinal knives.

### Brief description of the figures

Fig. 1 shows a support frame 10 to be used in the cutting frame 2 according to the first aspect of the present invention.
Fig. 2 shows a cutting frame 10 according to the first aspect of the present invention comprising the support frame of fig. 1 and a number of exchangeable longitudinal knives 4.
Fig. 3A shows one end 6,8 of an exchangeable longitudinal knife 4 to be used in the cutting frame according to the first aspect of the present invention.
Fig. 3B shows an example of a first knife locking means 24 of an exchangeable longitudinal knife 4 to be used in the cutting frame according to the first aspect of the present invention.
Fig. 3C shows another example of a first knife locking means 24 of an exchangeable longitudinal knife 4 to be used in the cutting frame according to the first aspect of the present invention.
Fig. 3D shows two examples of a cross section of an exchangeable longitudinal knife 4 for used in the cutting frame according to the first aspect of the present invention.
Fig. 4 shows a cutting device 100 according to the first aspect of the present invention comprising the support frame of fig. 1 fixed onto a driveshaft 28 and furthermore showing a couple of exchangeable longitudinal knives 4.
Fig. 5 shows a cutting device 100 of fig. 4 comprising a number of exchangeable longitudinal knives 4 locked into a locked position onto the support frame 10.
Fig. 6 shows a cutting device 100 according to the first aspect of the present invention comprising the support frame of fig. 1 fixed onto a driveshaft 28 and furthermore comprising a fixed transverse knife 32.
Fig. 7 shows a cutting device 100 according to the first aspect of the present invention comprising the support frame of fig. 1 fixed onto a driveshaft 28 and furthermore comprising a fixed transverse knife 32 as well as a fixed longitudinal knife 30.
Fig. 8 shows the cutting frame of fig. 5 furthermore comprising a reinforcement stud 80.
Fig. 9A shows one example of the geometry of openings 22a,22b for accommodating an exchangeable longitudinal knife 4 in a first or a second transverse frame girder 12,14.
Fig. 9B shows another example of the geometry of openings 22a,22b for accommodating an exchangeable longitudinal knife 4 in a first or a second transverse frame girder 12,14.
Fig. 9C shows yet another example of the geometry of openings 22a,22b for accommodating an exchangeable longitudinal knife 4 in a first or a second transverse frame girder 12,14.
Fig. 9D shows still another example of the geometry of openings 22a,22b for accommodating an exchangeable longitudinal knife 4 in a first or a second transverse frame girder 12,14.
Fig. 9E shows an alternative example of the geometry of openings 22a,22b for accommodating an exchangeable longitudinal knife 4 in a first or a second transverse frame girder 12,14.
Fig. 9F shows yet another example of the geometry of openings 22a,22b for accommodating an exchangeable longitudinal knife 4 in a first or a second transverse frame girder 12,14.

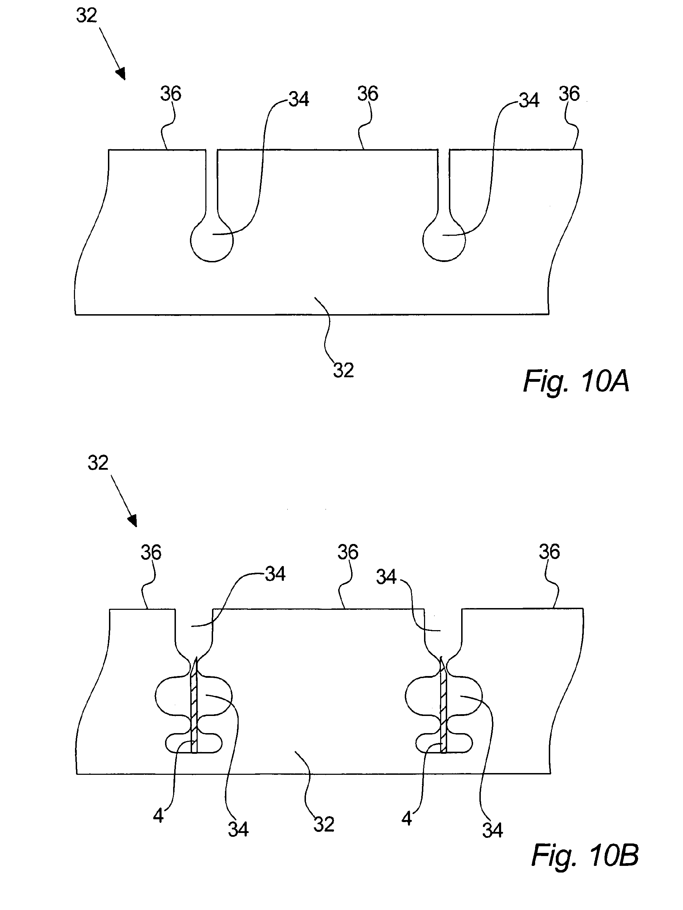

Fig. 10A shows one example of the geometry of openings 34 for accommodating an exchangeable longitudinal knife 4 in a fixed transverse knife 32.
Fig. 10B shows another example of the geometry of openings 34 for accommodating an exchangeable longitudinal knife 4 in a fixed transverse knife 32.
Fig. 11A shows a first or a second transverse frame girder 12,14 comprising a range of openings 22a,22b alongside the lengths of said frame girder for providing flexibility as to the number and positions of exchangeable longitudinal knife 4 to be locked into a locking position onto the corresponding support frame.
Fig. 11B shows a fixed transverse knife 32 corresponding to the frame girder of fig. 11A, and comprising a range of openings 34 alongside the lengths of said knife for providing flexibility as to the number and positions of exchangeable longitudinal knife 4 to be locked into a locking position onto the corresponding support frame.
Fig. 12A shows another first or second transverse frame girder 12,14 comprising a range of openings 22a,22b alongside the lengths of said frame girder for providing a flexibility as to the number and positions of exchangeable longitudinal knife 4 to be locked into a locking position onto the corresponding support frame.
Fig. 12B shows a fixed transverse knife 32 corresponding to the frame girder of fig. 12A, and comprising a range of openings 34 alongside the lengths of said knife for providing flexibility as to the number and positions of exchangeable longitudinal knife 4 to be locked into a locking position onto the corresponding support frame.
Fig. 13A and fig 13B show one example of second knife locking means 26 comprising a bracket 50 comprising a penetrating hole 52 and a clip 60a.
Fig. 14A and fig. 14B show another example of second knife locking means 26 comprising a bracket 50 comprising two fins 62a,62b, each said fins comprising a hole for accommodating a locking pin 72 which secures a bar 70 arranged in the slot 44 of an exchangeable longitudinal knife 4.

### Detailed description of the invention

The cutting frame according to the first aspect of the present invention comprises one or more exchangeable longitudinal knives 4 each having a first end 6 and a second end 8; and a support frame 10 for accommodating said one or more exchangeable longitudinal knives.

The support frame 10 itself of the cutting frame 2 according to a first aspect of the present invention comprises a first transverse frame girder 12; and a second transverse frame girder 14; and at least one longitudinal frame girder 16 having two opposite ends 18,20; said at least one longitudinal frame girder at one of said ends 18,20 connecting the first transverse frame girder 12; and said at least one longitudinal frame girder at another of said ends 18,20 connecting the second transverse frame girder 14.

The first transverse frame girder 12 and the second transverse frame girder 14 are preferably oriented in a parallel orientation to each other.

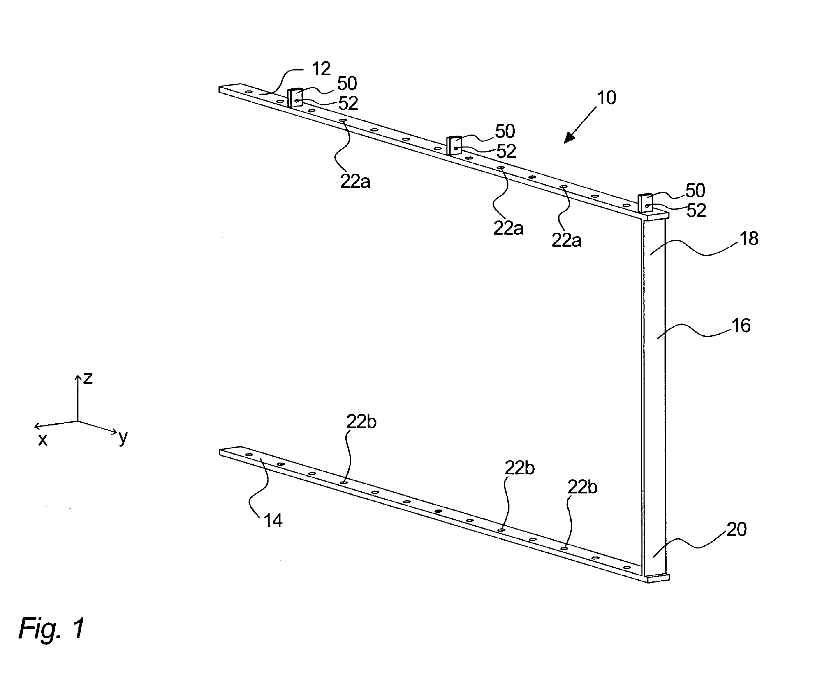

Fig. 1 shows a support frame to be used in the cutting frame according to a first aspect of the present invention. The support frame of fig. 1 comprises a first transverse frame girder 12; and a second transverse frame girder 14; and at least one longitudinal frame girder 16 having two opposite ends; said at least one longitudinal frame girder at one of said ends connecting the first transverse frame girder 12; and said at least one longitudinal frame girder at another of said ends connecting the second transverse frame girder 14. The first transverse frame girder 12 as well as the second transverse frame girder 14 each comprises an array of openings 22a,22b for accommodation of an exchangeable longitudinal knife.

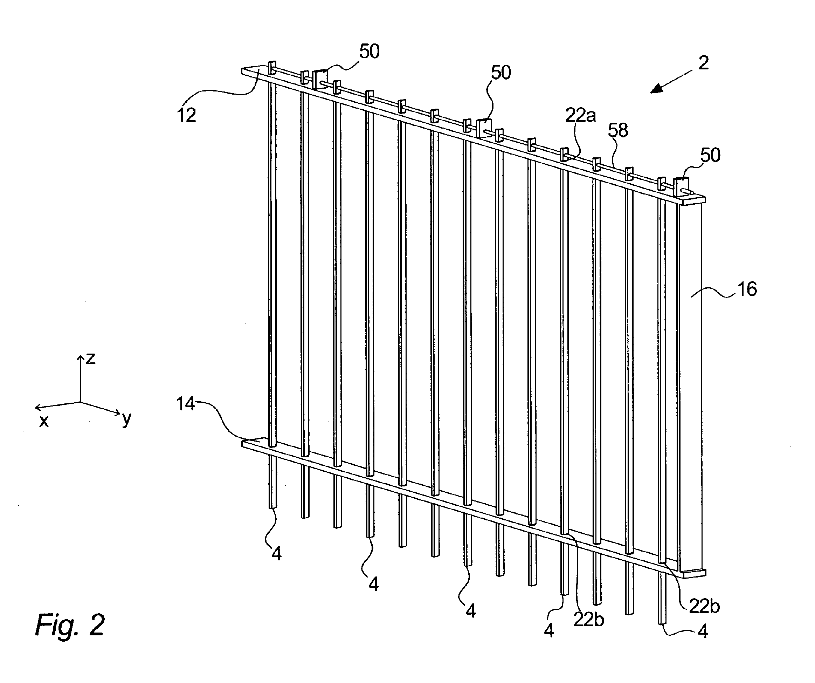

Fig. 2 shows a cutting frame according to a first aspect of the present invention. The cutting frame of fig. 2 comprises the support frame of fig. 1 into which a number of exchangeable longitudinal knives are locked into a locked position.

In order to be able to distinguish the different spatial directions and planes in respect of the cutting frame according to the first aspect of the present invention and of the cutting device according to the second aspect of the present invention, the following definition is adhered to:

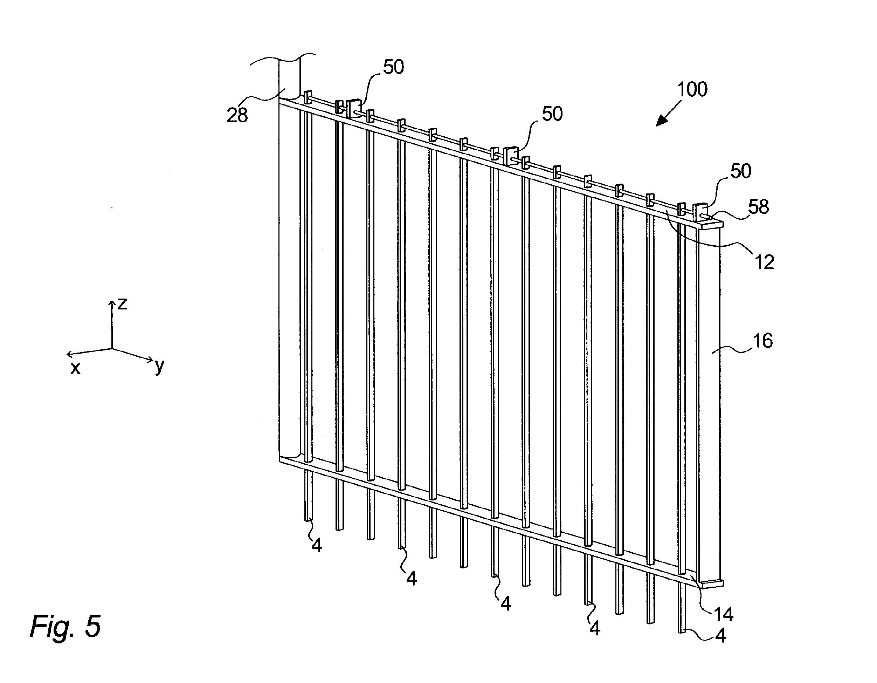

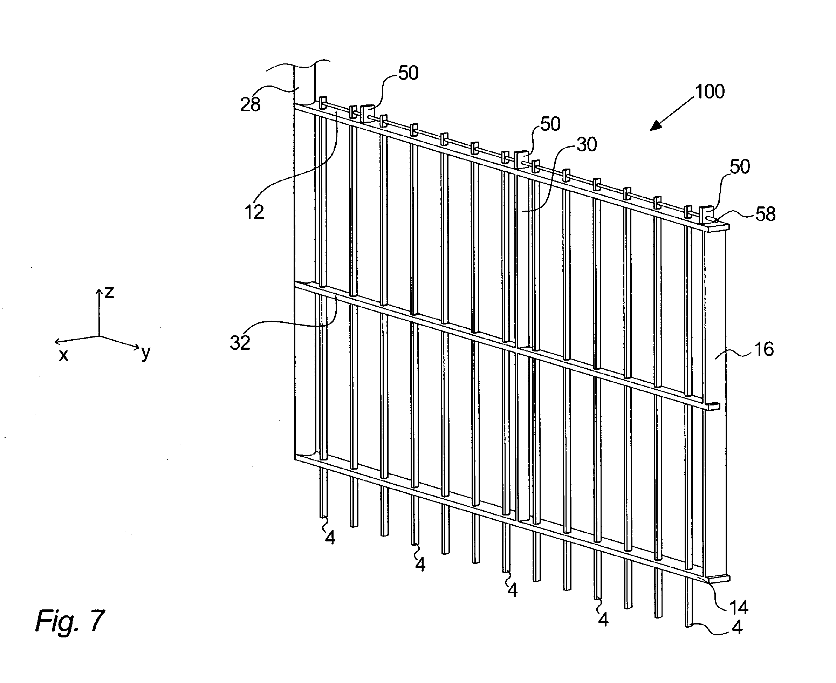

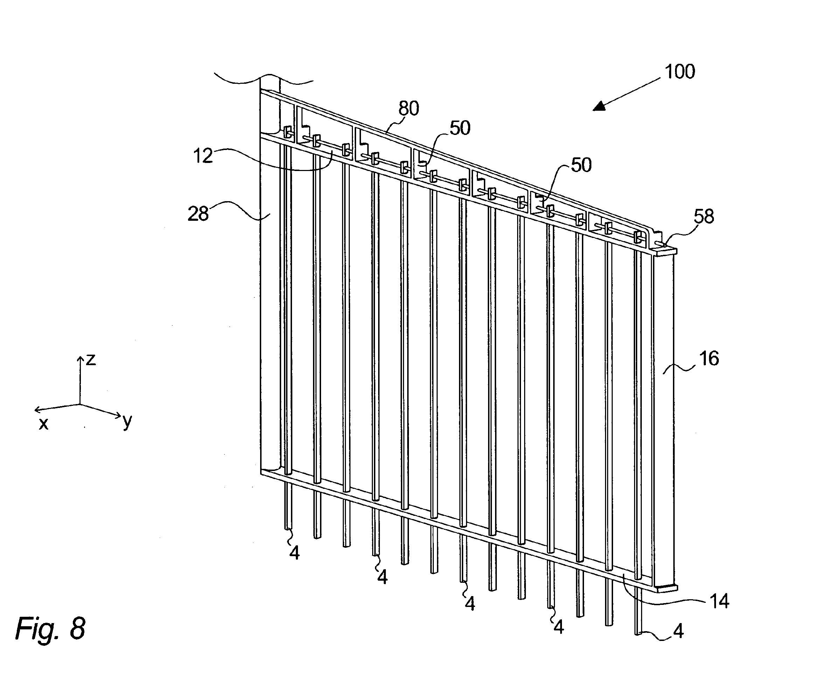

In the present description and the appended claims a three-dimensional Cartesian coordinate system is associated with the cutting frame according to the first aspect of the present application and with the cutting device according to the second aspect of the present invention in such a way that said exchangeable longitudinal knives when locked into a locked position onto said support frame, are essentially aligned with the z-axis of said coordinate system. Hence, the z-axis defines a longitudinal direction. In analogy, the y-axis of said coordinate system defines the transverse direction. Accordingly, the cutting frame of the first aspect of the present invention essentially lies in the plane defined by the y-axis and the z-axis of said coordinate system. The coordinate system in association with the cutting frame according to the first aspect of the present application and with the cutting device according to the second aspect of the present invention is depicted in the figures: Fig. 1, 2, 4, 5, 6, 7, and 8.

Preferably, the first transverse frame girder 12; and the second transverse frame girder 14; and said at least one longitudinal frame girder 16 essentially lie in the y-z-plane of the above-identified coordinate system.

In a preferred embodiment of the first aspect of the present invention, the first transverse frame girder 12 and the second transverse frame girder 14 is essentially being parallel to the y-axis of this coordinate system.

The lengths of the first transverse frame girder 12 and the second transverse frame girder 14 depend inter alia on the size of the curd vat into which the cutting frame is to be arranged. Typically lengths are 600 - 2,500 mm, such as 800 - 2,200 mm, e.g. 1,000 - 2,000 mm, such as 1,200 - 1,800 mm, for example 1,400 - 1,600 mm.

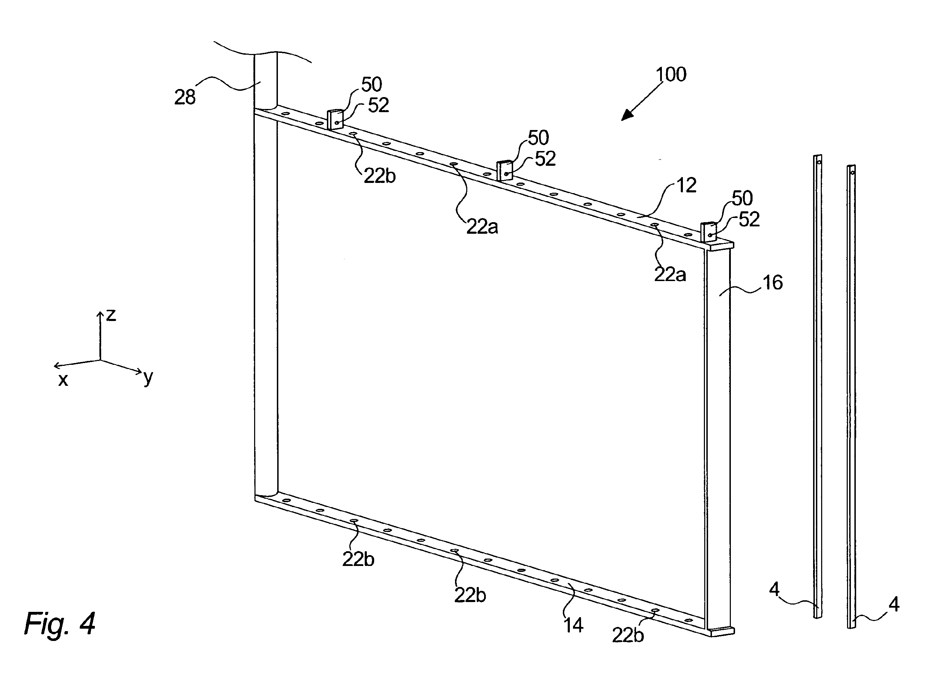

According to the first aspect of the present invention, the first transverse frame girder 12 as well as the second transverse frame girder 14 comprise one or more openings 22a,22b, wherein said at least one opening 22a in the first transverse frame girder 12 on the one hand, and wherein said at least one opening 22b in the second transverse frame girder 14 on the other hand together in pairs provides for accommodation of one of said exchangeable longitudinal knives 4. Hence, the positions of the pairs of openings 22a and 22b respectively are arranged at positions in the first frame girder and the second frame girder respectively which allows for the accommodation of said exchangeable longitudinal knives 4. Preferably each pair of openings 22a,22b in the first frame girder and the second frame girder respectively defines a line which is essentially parallel to the z-axis of said Cartesian coordinate system. Fig. 1 and 4 show the arrangement in pairs of these openings 22a,22b at various positions alongside the first frame girder 12 and the second frame girder 14 respectively.

Preferably, each pair of openings 22a,22b in the first frame girder and the second frame girder respectively defines a line which is essentially parallel to the longitudinal frame girder 16.

It is clear that the closer the openings are located alongside the first and the second frame girder 12,14 respectively, the higher degree of flexibility as to altering the configuration of the exchangeable longitudinal knives 4 is obtained. However, considerations as to strengths of the frame girders must be taken. The closer the openings are arranged, the less strength of the frame girder is encountered.

A distance between the openings 22a and/or between the openings 22b (as measured from the centre of one opening to the centre of the proximate opening next to said one opening of 15 - 150 mm is suitable. Such distances may be 20 - 120 mm, such as 25 - 100 mm, for example 30 - 80 mm, such as 40 - 70 mm, e.g. 50 - 60 mm.

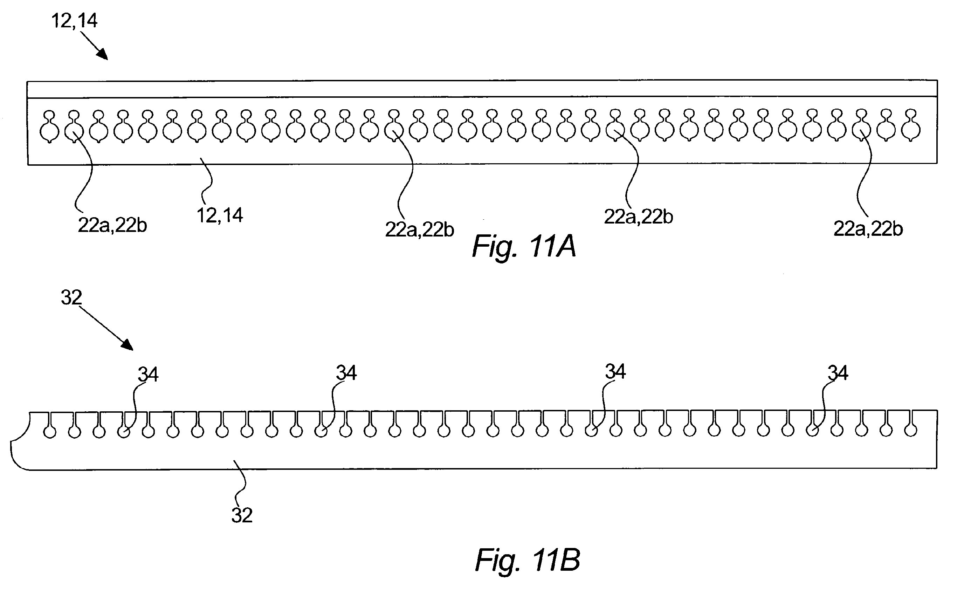

An example of a first or second frame girder having openings arranged equidistant to each other is shown in Fig. 11A. A fixed transverse knife 32 corresponding to this frame girder 12,14 is shown in Fig. 11B.

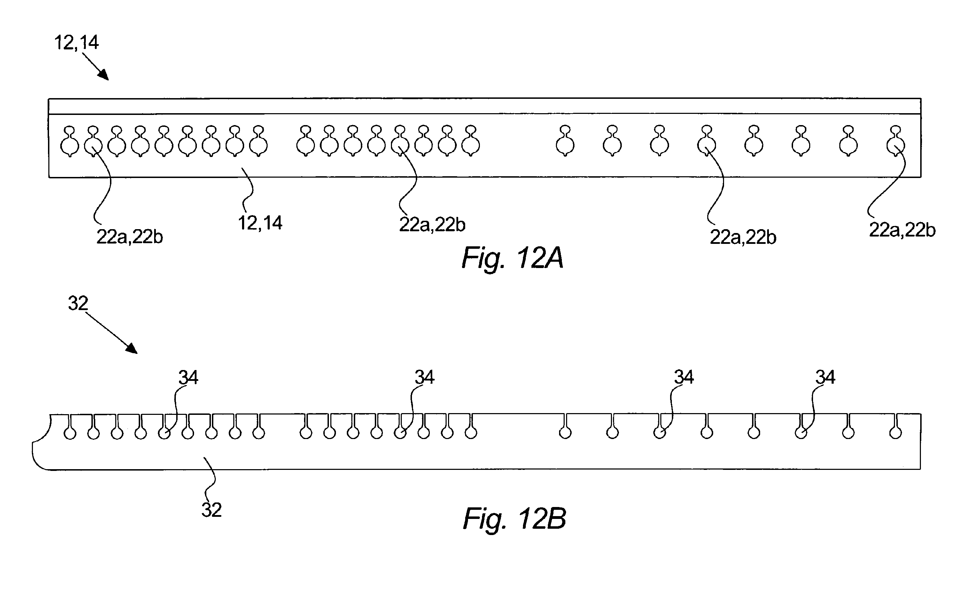

In some applications it has been found that it will be advantageous to have higher degree of flexibility as to the positions of the exchangeable longitudinal knives near the outer periphery of the circular movement of the cutting frame according to a first aspect of the present invention or according to the cutting device according to a second aspect of the present invention. For this reason it may be advantageous to provide the frame girders 12,14 with two sets of openings; one set of openings being located near the driveshaft end of these frame girders; another set of openings being located at the opposite end these frame girders, wherein the distance between neighbouring openings in the first set is different from the distance between neighbouring openings in the second set. Such an embodiment provides for less openings to be made in the frame girders which in turn saves cost in their manufacture. A frame girder 12,14 of this type is shown in Fig. 12A. A fixed transverse knife 32 corresponding to this frame girder 12,14 is shown in Fig. 12B.

The number of openings 22a,22b in the frame girders 12,14 depends inter alia on the size of the support frame and thereby on the size of the cutting frame and the cutting device and the size of the curd vat. The number of openings in each frame girder 12,14 may lie within the range of 8 - 40, e.g. 10 - 38, for example 12 - 36, such as 14 - 34, for example 16 - 32, such as 18 - 30, for example 20 - 28, such as 22 - 26, for example 24 openings 22a,22b. Typically 12 - 18 openings 22a,22b are provided.

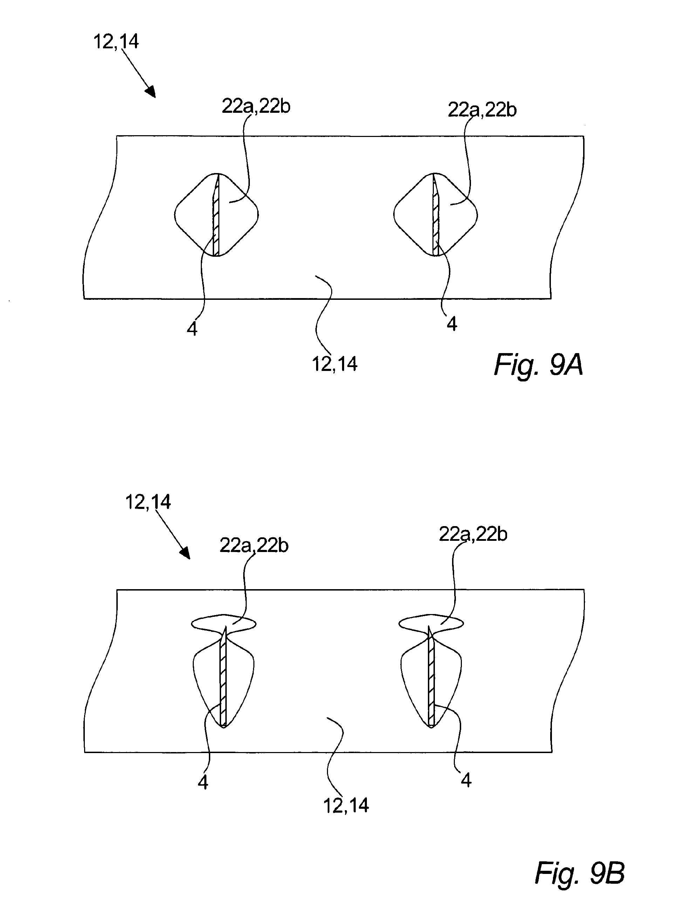

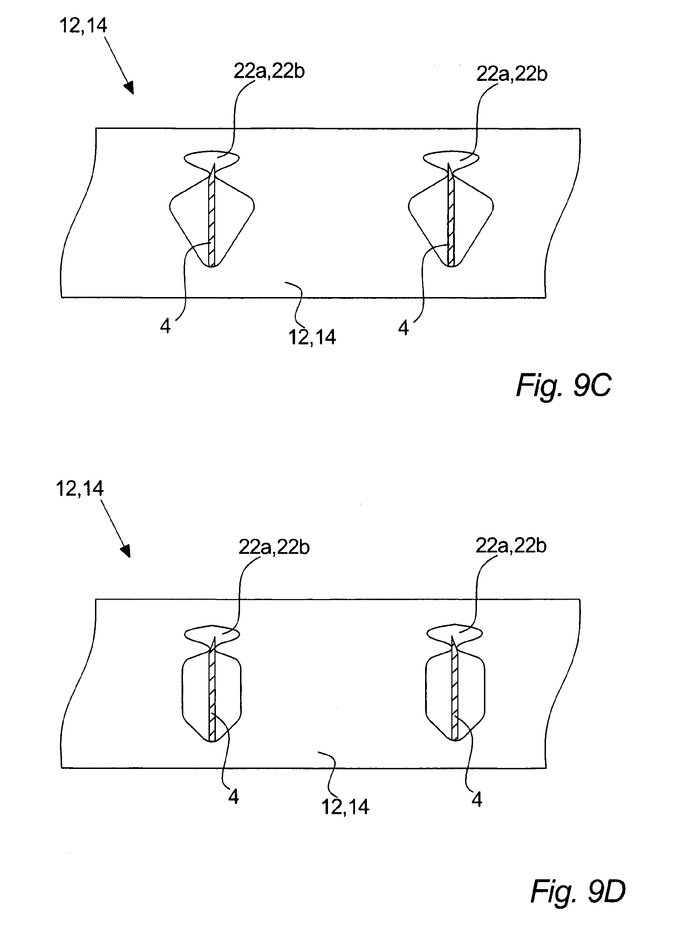

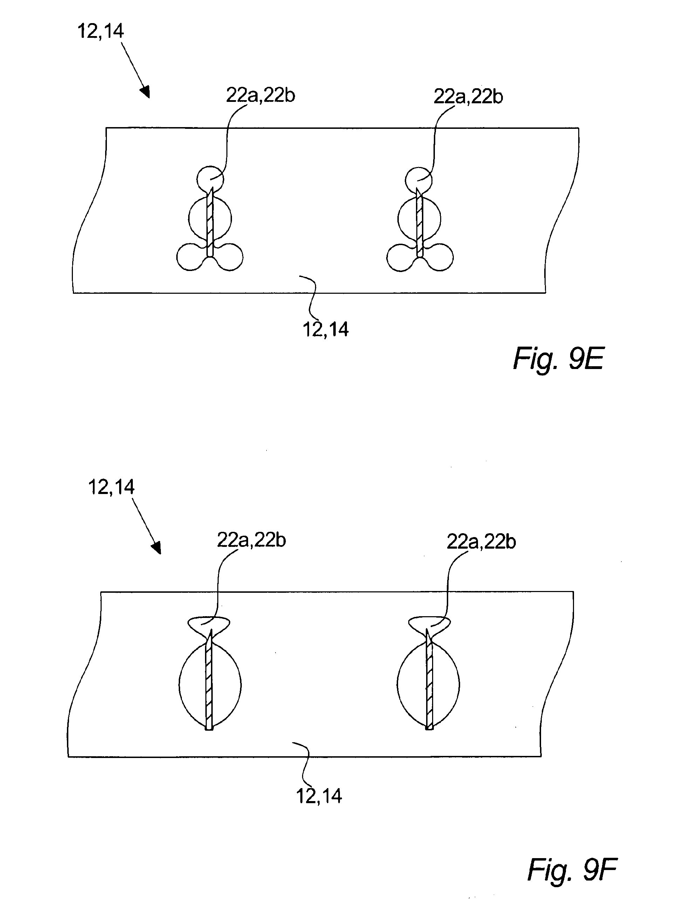

The openings 22a,22b of the first frame girder and the second frame girder respectively may be of any suitable shape. It is however important that the holes 22a,22b have a shape that provides for an accommodation of the exchangeable longitudinal knives 4 in a way that minimises any play of the knives in said hole. Examples of the such suitable geometries of the holes 22a,22b are depicted in Fig. 9A, 9B, 9C, 9D, 9E and 9F. These figures show a plane view part of a first or second transverse frame girder 12,14, its corresponding opening 22a,22b having a specific geometry, and an exchangeable longitudinal knife 4 accommodated therein. These depicted geometries have proven especially advantageous in terms of holding properties and ease of cleaning. The specific shape of the hole is important for three reasons. First it is advantageous to achieve good holding properties with minimum surface contact in general. Secondly its openness provides for good clean-ability and thirdly it is important that the sharp edge of the exchangeable longitudinal knife (its vulnerable edge) has no possibility of touching the frame girders to avoid wear and therefore the risk of foreign matter ending up in the product.

In a preferred embodiment the cutting frame 2 according to the first aspect of the present invention, comprises driveshaft fastening means for fixing said cutting frame to a driveshaft 28.

Such driveshaft fastening means provides for fixing or fastening said cutting frame 2 onto a driveshaft 28. The driveshaft fastening means may in a broad sense be any kind of means suitable for fixing or fastening said cutting frame onto said driveshaft. Such driveshaft fastening means may accordingly be in the form of brackets allowing such fixing or fastening; or it may be in the form of specially adaptations of the shapes of the driveshaft and the first and the second transverse frame girders respectively, such as cut-aways or the like so that these elements fits together and form fitting surfaces which allows for sufficient strength when welded together.

In a preferred embodiment of this embodiment of the cutting frame according to the first aspect of the present invention, said driveshaft fastening means is arranged on said cutting frame 2 in an arrangement which provides for said driveshaft being fixed to said cutting frame in an orientation which is essentially parallel to said one or more exchangeable longitudinal knives 4, when said knives are locked into a locked position onto said support frame 10. Hence, in this embodiment, the driveshaft is arranged in an orientation so that said driveshaft is essentially parallel to the z-direction of the above-mentioned three dimensional Cartesian coordinate system.

In addition to the support frame, the cutting frame comprises one or more exchangeable longitudinal knives 4 each having a first end 6 and a second end 8.

The exchangeable longitudinal knives 4 are responsible for at least part of the cutting action of the cutting frame according to a first aspect of the present invention. The feature that the longitudinal knives 4 are exchangeable is a key feature of the present invention as this feature provides for the full flexibility of the configuration of the cutting frame in terms of the number of longitudinal knives as well as the distribution or density of the knives at various positions at the openings 22a,22b alongside the frame girders. This flexibility has proved to be advantageous in that different cheese types requires different configurations of the cutting frame in order to provide for an optimum process in which inter alia the loss of fat into the whey and/or the loss into the whey of proteins in the form of fines is reduced.

Preferably, the exchangeable longitudinal knives 4 are each straight having no U-shaped bends. An example of such a knife is depicted in Fig. 2, 4, 5, 6, 7 an 8.

In a preferred embodiment of the first aspect of the present invention, said one or more exchangeable knives 4 are made of Duplex 2205 steel, AISI 301 steel, AISI 304 steel or AISI 316 steel. These steel types have proved advantageous as to mechanically and chemically durability. Other types of steel may however also be contemplated.

In a preferred embodiment of the first aspect of the present invention, said one or more exchangeable longitudinal knives 4 have a thickness of 1.5 - 5.0 mm, such as 2.0 - 4.5 mm, e.g. 2.5 - 4 mm, such as 3.0 - 3.5 mm. Such examples of thicknesses provides for a preferred combination of sturdiness and cutting action.

In a preferred embodiment of the first aspect of the present invention, said one or more exchangeable longitudinal knives 4 each have a blunt edge 76 and a sharp edge 78. Such an embodiment provides for a desirable combination of cutting action when the knives move in one direction and stirring or non-cutting action when the knives move in the opposition direction. The length of the knife depends on the vat size. In a small vat a knife length of 250 - 500 mm is suitable and in a large vat a knife length of 1000 - 1700 mm is suitable. Any suitable number of exchangeable longitudinal knives 4 may be employed. The number to be employed depends on the optimum configuration of the specific cheese type to be made. This number may lie within the range of 8 - 40, e.g. 10 - 38, for example 12 - 36, such as 14 - 34, for example 16-32, such as 18 - 30, for example 20 - 28, such as 22 - 26, for example 24 exchangeable longitudinal knives 4. Typically 12 - 18 exchangeable longitudinal knives 4 are employed in a configuration.

In a preferred embodiment of the cutting frame according to the first aspect of the present invention, said cutting frame furthermore comprises one or more fixed longitudinal knives 30, wherein said one or more fixed longitudinal knives 30 being arranged between said first transverse frame girder 12 and said second transverse frame girder 14 in a longitudinal direction; and wherein said one or more fixed longitudinal knives 30 being fixed to said first transverse frame girder 12 and said second transverse frame girder 14 e.g. by welding.

Such fixed longitudinal knives are preferably oriented in a direction essentially parallel to the z-axis of the associated Cartesian coordinate system referred to above.

The number of fixed longitudinal knives 30 fixed to the cutting frame may be any suitable number. Two, three or four fixed longitudinal knives 30 have proven beneficial.

In another preferred embodiment of the cutting frame according to the first aspect of the present invention, said cutting frame furthermore comprises one or more additional fixed transverse knives 32, wherein said one or more fixed transverse knives 32 being arranged between said first transverse frame girder 12 and said second transverse frame girder 14 in a transverse direction; and wherein said one or more fixed transverse knives being fixed to said longitudinal frame girder e.g. by welding; wherein said one or more fixed transverse knives comprising one or more openings 34 for accommodating one or more of said exchangeable longitudinal knives 4, said one or more openings 34 of said one or more fixed transverse knives 32 each being located at positions defined by a line extending between a pair of corresponding two openings 22a,22b in the first transverse frame girder 12, and the second transverse frame girder 14 respectively.

The number and positions of openings 34 of said one or more fixed transverse knives preferably corresponds to the number and positions of the corresponding openings 22a,22b in the corresponding first and second frame girder 12,14.

The number of additional fixed transverse knives 32 fixed to the cutting frame may be any suitable number. Two, three or four fixed transverse knives 32 have proven beneficial.

Such fixed transverse knives are preferably oriented in a direction essentially parallel to the y-axis of the associated Cartesian coordinate system referred to above.

In a preferred embodiment of the cutting frame according to the first aspect of the present invention said one or more openings 34 of said one or more fixed transverse knives 32 is/are each in the form of a slots extending to an edge 36 of said one or more fixed transverse knives.

In such an embodiment said one or more openings 34 in the form of a slot allows for release of an exchangeable longitudinal knife 4 from said one or more fixed transverse knives 32 by movement thereof in a direction parallel to an x-z-plane of the associated Cartesian coordinate system referred to above.

In a preferred embodiment of the cutting frame according to the first aspect of the present invention said first transverse frame girder 12 and/or said second transverse frame girder 14 and/or one or more of said one or more fixed transverse knives 32 having a declined orientation.

By the term "having a declined orientation" is meant that said first transverse frame girder and/or said second transverse frame girder and/or said one or more fixed transverse knives comprises a surface, preferably a surface facing the positive direction of the z-axis which is declined in respect of the plane defined by x- and y-axis of the associated Cartesian coordinate system referred to above.

A main reason for having a declined orientation is that it provides a better draining surface of cleaning liquids after a cleaning process has been performed. Furthermore, a declined frame girder/fixed knife will provide a more optimum stirring action.

It is preferred that this declined orientation of said surface corresponds to an angle of 5 - 20°, such as 10 - 15° in relation to the plane defined by the x-y-plane of the associated Cartesian coordinate system referred to above.

In a preferred embodiment of the cutting frame according to the first aspect of the present invention said first transverse frame girder 12 and/or said second transverse frame girder 14 and/or one or more of said one or more fixed transverse knives 32 and/or one or more of said fixed longitudinal knives 30 having a sharp edge and a blunt edge.

Providing these fixed frame girders and/or fixed knives with a sharp (cutting) edge improves the cutting action of the cutting frame.

In another preferred embodiment of the cutting frame according to the first aspect of the present invention, said support frame 10 comprises one or more reinforcement studs 80 and fixed to said first transverse frame girder 12 and/or said second transverse frame girder 14 and optionally fixed to said drive shaft 28 of the cutting device.

The embodiments of the cutting frame comprising one or more fixed longitudinal knives 30 and/or one or more additional fixed transverse knives 32 and/or one or more reinforcement studs 80 result in a more sturdy and strong cutting frame.

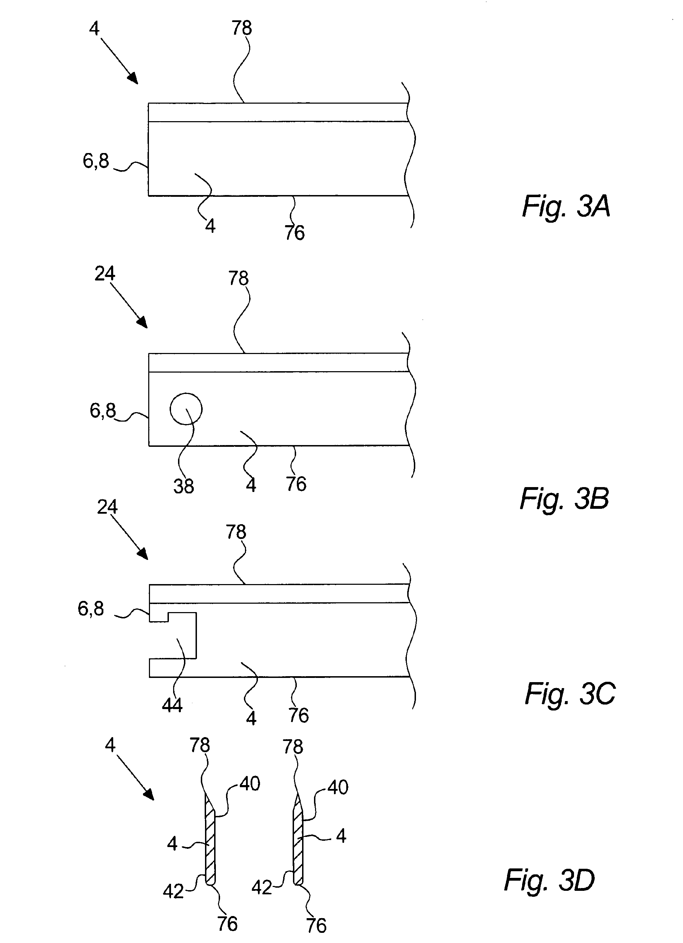

In the cutting frame according to the first aspect of the present invention, the exchangeable longitudinal knives 4 are locked into a locked position onto said support frame of said cutting frame. This locking of the exchangeable longitudinal knives 4 is partly effected by a first knife locking means 24 for releasable locking said one or more exchangeable longitudinal knives 4 into a locked position onto said support frame 10. Examples of first knife locking means 24 are shown in fig. 3B and 3C.

The cutting frame according to the first aspect of the present invention further comprises second knife locking means 26. These second knife locking means 26 is comprised in the said support frame of the cutting frame according to the first aspect of the present invention. The second knife locking means 26 provides for releasable locking said one or more exchangeable longitudinal knives 4 into a locked position onto said frame by engagement of said first knife locking means 24 of said one or more exchangeable longitudinal knives 4 with said second knife locking means 26 of said frame 10.

Hence, the first knife locking means and the second knife locking means interacts so as to lock the exchangeable longitudinal knives 4 to the support frame 10.

In a preferred embodiment of the cutting frame according to a first aspect of the present invention said first knife locking means 24 of said one or more exchangeable longitudinal knives 4 is in the form of a hole 38 penetrating from a first side 40 to a second side 42 at one end 6,8 of said exchangeable longitudinal knife 4. Such an embodiment is shown in 3B. Fig. 3B shows an end 6,8 of an exchangeable longitudinal knives 4 having a sharp edge 78 and a blunt edge 76 and comprising an opening in the form of a hole 38 near said end 6,8. In Fig. 3B the hole 38 itself represents said first knife locking means 24.

In another preferred embodiment of the cutting frame according to a first aspect of the present invention said first knife locking means 24 of said one or more exchangeable longitudinal knives 4 is in the form of a slot 44 penetrating from a first side 40 to a second side 42 of said exchangeable longitudinal knife 4 at one end 6,8 of said exchangeable longitudinal knife and extending all the way to said one end. Such an embodiment is shown in Fig. 3C. Fig. 3C shows an end 6,8 of an exchangeable longitudinal knives 4 having a sharp edge 78 and a blunt edge 76 and comprising an opening in the form of a slot 44 near said end 6,8. In Fig. 3C the slot 44 extends all the way to the end 6,8 of said knife 4 and the slot itself represents said first knife locking means 24.

Numerous other types of first knife locking means 24 of said one or more exchangeable longitudinal knives 4 may be contemplated. Such other types of first knife locking means 24 of said one or more exchangeable longitudinal knives 4 may be in the form of one or more recesses in the knife 4 which serves as locking means. A person skilled in the art will be able to provide such other types of first knife locking means 24 of said one or more exchangeable longitudinal knives 4.

In a preferred embodiment of the cutting frame according to a first aspect of the present invention, said first knife locking means is arranged in the vicinity of said first end 6 or in the vicinity of said second end 8 of said exchangeable longitudinal knives 4. By the term "vicinity" is in the present description and the amended claims understood that said first knife locking means is located on said exchangeable longitudinal knives 4 at a distance from said first end 6 or second end 8 corresponding to 30 % of the total length of said exchangeable longitudinal knife 4 or less, such as 25 % of the total length of said exchangeable longitudinal knife 4 or less, for example 20 % of the total length of said exchangeable longitudinal knife 4 or less, for example 15 % of the total length of said exchangeable longitudinal knife 4 or less, such as 10 % of the total length of said exchangeable longitudinal knife 4 or less, for example 10 % of the total length of said exchangeable longitudinal knife 4 or less.

In a preferred embodiment of the cutting frame according to a first aspect of the present invention, said second knife locking means 26 is in the form of a) one or more fixed parts 46 being attached to said support frame 10 and b) one or more non-fixed parts 48 for engagement with said first knife locking means 24 of said one or more exchangeable longitudinal knives 4, and for engagement with said fixed parts 46 of said second knife locking means 26.

In a preferred embodiment of the cutting frame according to a first aspect of the present invention, said one or more fixed parts 46 of said second knife locking means 26 is attached to said support frame 10 in proximity to said first transverse frame girder 12 or in proximity of said second transverse frame girder 14. By the term "in proximity" as appearing in this context of the present description and the appended claims is meant that said one or more fixed parts 46 of said second knife locking means 26 is attached to said frame in a distance from said first transverse frame girder 12 or from said second transverse frame girder 14 in a longitudinal direction corresponding 30 % or less of the distance in a longitudinal direction (z-direction) between the first frame girder 12 and the second frame girder 14 measured at the longitudinal frame girder, such as 25 % or less of said distance, e.g. 20 % or less of said distance, such as 15 % or less of said distance, e.g. 10 % or less of said distance such as 5% or less of said distance.

In a preferred embodiment said one or more fixed parts 46 of said second knife locking means 26 is attached to said first transverse frame girder 12 or to said second transverse frame girder 14.

In one embodiment of the cutting frame 2 according to a first aspect of the present invention said one or more fixed parts 46 of said second knife locking means 26 are in the form of one or more brackets 50 being fixed to said first transverse frame girder 12 or to said second transverse frame girder 14. Such a location for the arrangement of the second knife locking means 26 in the form of one or more brackets has proven beneficial in that it allows for easy locking and unlocking the exchangeable longitudinal knives 4. Such an embodiment of the fixed parts of the second knife locking means is depicted in Fig. 1, 2, 4, 5, 6, 7 and 8. In these figures, the brackets 50 is fixed onto the first transverse frame girder 12.

The number of brackets in such embodiments may be any suitable number, such as 1 - 10, for example 2 - 9, such as 3 - 8, e.g. 4 - 7, such as 5 - 6 brackets. However any other number of brackets may be employed as well.

In a specially preferred embodiment said one or more brackets 50 of said fixed parts 46 of said second knife locking means 26 each comprise a hole 52 penetrating from a first side of said bracket 54 to a second side of said bracket 56. This embodiment is shown in Fig. 1. Fig. 1 depicts three brackets 50 each comprising a hole 52 penetrating from a first side to a second side.

In one embodiment of the cutting frame 2 according to a first aspect of the present invention said one or more non-fixed parts 48 of said second knife locking means 26 comprise one or more locking pins 58 for engagement into said hole 38 of one or more of said one or more exchangeable longitudinal knives 4 and into said hole 52 of one or more of said one or more brackets 50. Such an embodiment has proven beneficial due to its simple construction and easy handling and it accordingly allows for easy locking and unlocking the exchangeable longitudinal knives 4. Fig. 2, 5, 6, 7 and 8 show examples of this embodiment. These figures show fixed parts 46 of said second knife locking means 26 in the form of three or more brackets each comprise a hole 52 penetrating from a first side of said bracket 54 to a second side of said bracket 56, into which a locking pin 58 for engagement into said hole 38 of one or more of said one or more exchangeable longitudinal knives 4 and into said hole 52 of one or more of said one or more brackets 50 is accommodated. More than one locking pin 58 may be used.

It may be necessary to make sure that the locking pin 58 stays in position during use of the cutting frame. To this end said one or more of the bracket 50 may comprise one or more threads each accommodating a screw, such as a pointed screw which when tightened will hold the locking pin into position.

In another embodiment of the cutting frame 2 according to a first aspect of the present invention said one or more non-fixed parts 48 of said second knife locking means 26 comprise one or more clips 60 for engagement into said hole 38 of one or more of said one or more exchangeable longitudinal knives 4 and into said hole 52 of one or more of said one or more brackets 50.

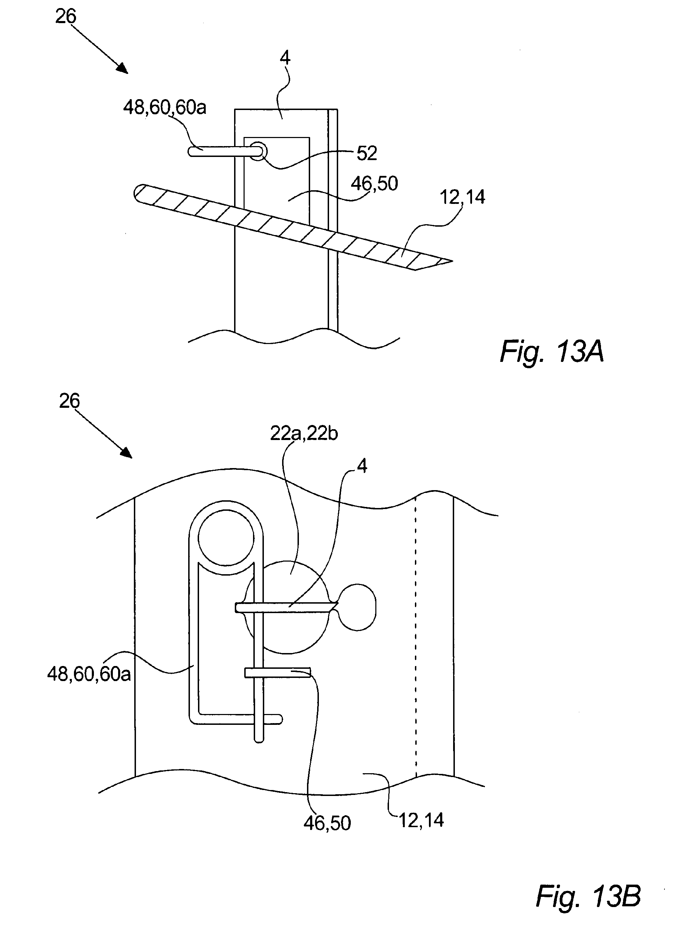

In this embodiment each exchangeable longitudinal knife 4 may comprises its own individually assigned clip 60a. Fig. 13A and 13B show an example of this embodiment. In Fig. 13A and 13B the fixed parts 46 of said second knife locking means 26 are in the form of one bracket 50 being fixed to said first transverse frame girder 12 or to said second transverse frame girder 14. The bracket 50 comprises a penetrating hole 52 which is accommodating an individually assigned clip 60a for locking said exchangeable longitudinal knife 4 into a locked position onto the support frame of the cutting frame.

In yet another embodiment of the cutting frame 2 according to a first aspect of the present invention said one or more brackets 50 defines two fins 62a,62b, each fin 62a,62b comprising a hole 64 penetrating from a first side 66 of said fin to a second side 68 of said fin. This embodiment is especially advantageous for use with exchangeable longitudinal knives 4, wherein said knives 4 having first knife locking means 24 in the form of a slot 44 extending from a first side 40 to a second side 42 of said exchangeable longitudinal knife 4 at one end 6,8 of said exchangeable longitudinal knife and extending all the way to said one end of the knife 4.

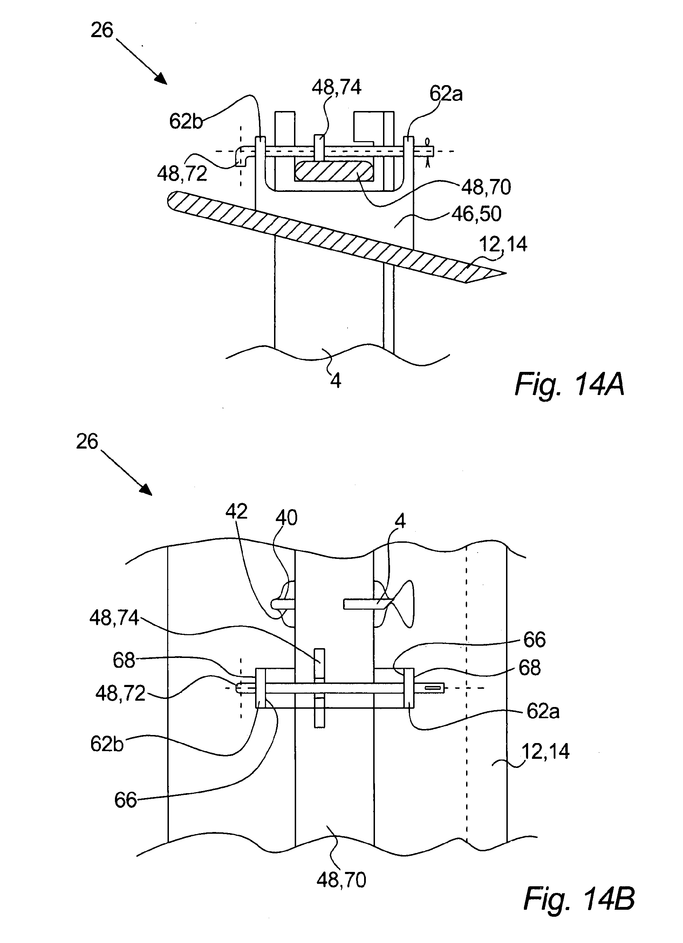

In this embodiment it is preferred that said one or more non-fixed parts 48 of said second knife locking means 26 comprise one or more bars 70 to be accommodated into the slots 44 of the exchangeable longitudinal knives; and wherein said one or more non-fixed parts 48 of said second knife locking means 26 furthermore comprise a locking pin 72 especially adapted to be accommodated into said holes 64 of said two fins 62a,62b for locking said one or more bars 70 and thereby said one or more exchangeable longitudinal knives 4 into a locked position onto said support frame 10. It may be preferred in this embodiment to include as one of the non-fixed parts 48 of said second knife locking means a bushing 74 or the like for adjusting the tension of the engagement between said first knife locking means 24 and said second knife locking means 26. Fig. 14A and 14B illustrate the principle of this kind of locking mechanism. In Fig. 14A and fig 14B the fixed parts 46 of said second knife locking means 26 are in the form of a bracket 50 comprising two fins 62a,62b being fixed to said first transverse frame girder 12 or to said second transverse frame girder 14. The fins 62a,62b each comprises a penetrating hole 64 which is accommodating locking pin 72 for locking said exchangeable longitudinal knife 4 into a locked position onto the support frame of the cutting frame. A bar 70 is accommodated into the slot 44 of the exchangeable longitudinal knife 4. The tension between the first knife locking means 24 and the second knife locking means 26 is adjusted by the bushing 74.

In an alternative embodiment of the cutting frame according to a first aspect of the present invention said one or more fixed parts 46 of said second knife locking means 26 may be attached to said driveshaft 28 in addition to or instead of being attached to said support frame 10.

The procedure to be followed in the process of changing an exchangeable longitudinal knife 4 is as follows: The non-fixed part 48 of the second knife locking means 26 (such as the items 58, 60, 60a, 70, 72, 74) is removed from the fixed part 46 (such as item 50, 62a, 62b) of said second knife locking means 26. Subsequently the exchangeable longitudinal knife 4 is moved in a longitudinal direction until one end of said knife is released from either the first transverse frame girder or the second transverse frame girder. At this point the exchangeable longitudinal knife 4 may be moved in the opposite longitudinal direction and accordingly be released from the remaining transverse frame girder in such a way that said end one passes outside the opening of the frame girder from which it has been released. The preferred geometries of the openings 22a,22b of the first and the second frame girders 12,14 as shown in Fig. 9A - 9F provides for the possibility of moving the exchangeable longitudinal knife 4 in a rotational movement in a transverse direction (in the x-z-plane of the associated Cartesian coordinate system referred to above). This possibility makes the removal and fitting of the exchangeable longitudinal knife 4 a little easier.

In the case where the cutting frame comprises one or more fixed transverse knives the exchangeable longitudinal knife 4 may be released from this the openings 34 of the fixed transverse knives by moving the exchangeable longitudinal knife 4 in a direction parallel to the x-z-plane of the associated Cartesian coordinate system referred to above.

The procedure to follow in locking an exchangeable longitudinal knife 4 onto the support frame 10 of the cutting frame according to the first aspect of the present invention is essentially opposite of the procedure described above

### The cutting device according to the second aspect of the present invention

The present invention relates in a second aspect to a cutting device 100 for use in a curd vat, said cutting device comprising one or more cutting frames 2 according to the first aspect of the present invention; said cutting device further comprising a drive shaft 28; wherein said one or more cutting frames being fixed to said drive shaft.

In order to be able to take full advantage of the cutting device according to the first aspect of the present application in a curd vat, this cutting device must be fixed to a driveshaft which may fit into a curd vat.

In a preferred embodiment of the cutting device according to the second aspect of the present invention, said drive shaft 28 being essentially parallel to the orientation of said one or more of exchangeable longitudinal knives 4 when said knives are locked into a locked position onto said support frame 10. Such an embodiment is shown in Fig. 4, 5, 6, 7 and 8. These figures show a cutting device in the form of exchangeable longitudinal knives, and a support frame being fixed onto a driveshaft 28. The support frame itself comprises one longitudinal frame girder 16 connecting a first transverse frame girder 12 at one end and connecting a second transverse frame girder 14 at another end. A drive shaft being fixed to the ends of the first transverse frame girder 12 and a second transverse frame girder 14 respectively opposite to the ends connected to the longitudinal frame girder 16. The driveshaft is oriented in a direction essentially parallel to the longitudinal direction (i.e. the z-direction of the associated Cartesian coordinate system referred to above).

This embodiment is especially preferred as this fixed orientation of the driveshaft onto the cutting frame has the effect that it is impossible for the driveshaft in this orientation to block or obstruct the free movement in a longitudinal direction of the exchangeable longitudinal knives 4 in the act of releasing and removing/mounting and fixing said exchangeable longitudinal knives from/onto the support frame 10. In this regard it should be noted that in order to remove or mount the exchangeable longitudinal knives 4 from or onto the support frame of the cutting device, it will be necessary to move said knives 4 in a longitudinal direction (z-direction) in the holes 22a,22b of the first transverse frame girder 12 and the second transverse frame girder 14 until said knives are fully released from said frame (in case of removal) or until said knives are positioned into the desired position in which they can be locked into a locked state (in case of fitting onto the frame).

Such a possibility for full movement of the exchangeable longitudinal knives in a longitudinal direction does not exist in respect of the prior art cutting frame known from EP 1 084 609 A1, in which - as indicated in the introduction of this application - the drive shaft obstructs the full and free movement at least for a part of said knives (cf. Fig. 6 of EP 1 084 609 A1).

In one embodiment of the cutting device according to the second aspect of the present invention, the cutting device comprises more than one cutting frame.

Hence, in a preferred embodiment of the cutting device according to the second aspect of the present invention, the number of cutting frames being fixed to said drive shaft is selected from the group comprising 1 - 6, such as 2 - 5, e.g. 3 - 4 cutting frames.

Having more than one cutting frame fixed to said driveshaft provides for a more efficient cutting of the cheese or casein curd.

In one embodiment of the cutting device according to the second aspect of the present invention said support frame 10 comprises one or more reinforcement studs 80 fixed to said drive shaft 28 and fixed to said first transverse frame girder 12 and/or said second transverse frame girder 14. Such a design makes the cutting device sturdier and thus makes the cutting device less prone to failure due to mechanical stresses exerted to the cutting device.

In a preferred embodiment of the cutting frame and/or the cutting device according to the first and/or second aspect of the present invention one or more agitator blades are included in said cutting frame and/or said cutting device. Such agitator blades provide for proper stirring and agitation, and such agitator blades are well known in the art.

The parts making up the cutting frame may be made of any food approved materials, typically stainless steel AISI 301, AISI 304, AISI 316, AISI 316L, Duplex materials 2205.

### The curd vat according to the third aspect of the present invention

The present invention relates in a third aspect to a curd vat comprising a cutting frame according to the first aspect of the present invention and/or comprising a cutting device according to the second aspect of the present invention.

The curd vat according to the third aspect of the present invention provides for an apparatus for stirring and cutting curd formed in e.g. a cheese manufacturing process. This curd vat has the advantage that it enables full flexibility as to the configuration of the cutting frame(s) of said curd vat. This flexibility resides in the fact that the cutting frame enables exchange of the exchangeable longitudinal knives 4 fixed on the support frame 10 of the cutting frame 2 of the cutting device 100 arranged inside the curd vat. The term "full flexibility as to the configuration of the cutting frame(s) of the curd vat" shall in the present description be understood as meaning that it is possible to fully alter the number of exchangeable longitudinal knives as well as the distribution or density of the exchangeable longitudinal knives at various positions at the locations of the openings 22a,22b of the first and second frame girders 12,14 respectively, even when the cutting frame and the cutting device is arranged inside the curd vat.

In one embodiment of the curd vat of the third aspect of the present invention said curd vat is of the type selected from the group comprising: a single shaft horizontal vat, a multiple shaft horizontal vat, a single shaft vertical vat and a multiple shaft vertical vat.

In an especially preferred embodiment of the curd vat of the third aspect of the present invention said curd vat is of the type double-O-dual shaft curd vat, such as the "Tetra Damrow Double-O Vat".

In a preferred embodiment of the curd vat of the third aspect of the present invention said curd vat comprises a dish-shaped bottom. In an alternative embodiment of the curd vat, said curd vat comprises a bottom having a spherical shape. In such an embodiment the various exchangeable longitudinal knife 4 to be fitted onto the support frame of the corresponding support frame will typically have different lengths to cope with the variation of depths of the curd vat depending on the distance from the centre of the driveshaft.

Due to the fact that said exchangeable longitudinal knives during the act of removing from the support frame 10 or during the act of mounting onto the support frame 10, necessarily will implicate movement of said exchangeable longitudinal knives 4 in a longitudinal direction (z-direction) in the holes 22a,22b of the first transverse frame girder 12 and the second transverse frame girder 14 until said knives are fully released from said frame or until said knives are positioned into the desired position in which they can be locked into a locked state, there must obviously be room for such movement in a longitudinal direction. The requirement as to presence of room applies as well in respect of movement of the locking pin/locking pins 58 or clip 60 of the non-fixed part of the second knife locking means 26.

Depending on the specific type of curd vat used, such room for movement of the exchangeable longitudinal knives 4 and/or locking pin 58 or clip 60 may be provided in different ways.

In case the curd vat is of the type double-O-dual shaft curd vat, it may be possible to turn the driveshaft and thereby the cutting frames into a position which allows for unlocking the exchangeable longitudinal knives by moving a locking pin 58 from its locking position on the cutting frame accommodated in one compartment of the curd vat associated with one of the two shafts into the other compartment associated with the other of the two shafts. Once the locking pin 58 in this way is removed from its corresponding brackets the exchangeable longitudinal knives may be removed from the cutting frame and subsequently be removed from the curd vat.

In the case of other types of curd vats, the housing of the curd vat may be provided with a hole which in turn may be covered by a hatch. Such a hole in the housing of the curd vat may provide for sufficient room to be able to remove the locking pin or clip and may provide for sufficient room to be able to remove or mount the exchangeable longitudinal knives in the act of exchange, removal or mounting such knives.

A person skilled in the art may be able to come up with other means for providing for sufficient room to be able to remove or mount the exchangeable longitudinal knives as well as the locking pin locking these knives in the act of exchange, removal or mounting such knives.

The parts making up the cutting frame may be made of any food approved materials, typically stainless steel AISI 301, AISI 304, AISI 316, AISI 316L, Duplex materials 2205.

### The use according to the fourth aspect of the present invention

The present invention relates in a fourth aspect to the use of a cutting frame 2 according to the first aspect of the present invention or a cutting device 100 according to the second aspect of the present invention, or a curd vat 200 according to the third aspect of the present invention in a cheese manufacturing process.

In a preferred embodiment of the use according to the fourth aspect of the present invention, the use comprises selection of a specific configuration of exchangeable longitudinal knives 4, wherein said specific configuration of exchangeable longitudinal knives 4 relates to number of said knives and distribution of said knives alongside the first and second transverse frame girders.

In a preferred embodiment of the use according to the fourth aspect of the present invention, the use relates to improving a cheese manufacturing process by reducing the loss of fat into the whey.

In a preferred embodiment of the use according to the fourth aspect of the present invention, the use relates to improving a cheese manufacturing process by reducing the loss of cheese curd in the form of fines into the whey.

In another preferred embodiment of the use according to the fourth aspect of the present invention, the use relates to improving a cheese manufacturing process by controlling curd particle size and/or the curd particle size distribution.

In yet another preferred embodiment of the use according to the fourth aspect of the present invention, the use relates to improving a cheese manufacturing process by controlling moisture consistency of the cheese curd.

The above four purposes can be achieved by the curd vat according to a third aspect of the present invention by selecting a specific configuration of the exchangeable longitudinal knives which is optimum in respect of the actual cheese manufacturing process.

The above indicated specific uses of the curd vat according to the fourth aspect of the present invention in a cheese manufacturing process may be applicable to any similar use in manufacturing processes in respect of other curd types.

The cutting frame according to the first aspect of the present invention and the cutting device according to the second aspect of the present invention may be used in a curd vat of any size. Suitable sizes of curd vats according to the third aspect of the present invention may be curd vats having a volume of 2,000 - 40,000 1, such as 4,000 - 30,000 1, for example 4,000 - 25,000 1, such as 6,000 - 20,000 1, e.g. 8,000-18,000 1, such as 10,000 - 16,000 1, for example 12,000 - 14,000 1.

In one preferred embodiment of the use according to the fourth aspect of the present invention, the use relates to improving a cheese manufacturing process, wherein the cheese being manufactured is selected from the group comprising: a hard cheese, such as Cheddar, Emmenthaler, Swiss cheese; a semi-hard cheese, such as Gouda, Edam, Danbo, Samsø, Havarti, Tilsiter, Maasdam; a soft cheese, such as Feta, Blue Cheese; or a Pasta Filata, such as Mozzarella.

As mentioned above, a method of using the curd vat according to the third aspect of the present invention the feature of having full flexibility as to the configuration of the cutting frame(s) of the curd vat in terms of being able to fully alter the number of longitudinal knives as well as the distribution or density of the longitudinal knives at various positions at the locations of the openings 22a,22b of the first and second frame girders respectively, even when the cutting frame and the cutting device is arranged inside the curd vat, provides for improved yields of the curd manufacturing process as expressed in reduction of the loss of fat and casein into the whey.

Hence, the use of a curd vat of to the third aspect of the present invention is highly advantageous.

### Example

This example illustrates how a change in configuration of longitudinal cutting knives (i.e. the number of longitudinal knives as well as the distribution or density of the knives at various positions alongside the frame girders) may improve a cheese manufacturing process by reducing losses of fat into the whey and by reducing the amount of fines produced up to and including draining off the whey.

In the example the same cheese manufacturing recipe for producing the same type of cheese was used in two essentially identical curd vats differing only in the configuration of the longitudinal cutting knives (i.e. the number of longitudinal knives as well as the distribution or density of the knives at various positions alongside the frame girders). The curd vats were of the type: "vertical curd vat having two shafts" and each shaft comprised one cutting frame. Due to the fact that the two curd vats used each comprised a bottom having a spherical shape, the longitudinal knives of the curd vats used in this example were of different lengths varying from 1166 mm to 1518 mm.

In the first experiment the two cutting frame used comprised longitudinal cutting knives in a configuration corresponding to a prior art cutting frame. In this configuration, 16 longitudinal knives were arranged in the following distances from that specific end of the frame girder defining the outer periphery of the rotation (all distances in mm): 75.75, 150.75, 225.75, 300.75, 450.75, 525.75, 600.75, 675.75, 825.75, 900.75, 975.75, 1050.75, 1125.75, 1200.75, 1275.75 and 1350.75.

In the second experiment the two cutting frame used comprised longitudinal cutting knives in a configuration corresponding to an alternative configuration. In this configuration, 17 longitudinal knives were arranged in the following distances from that specific end of the frame girder defining the outer periphery of the rotation (all distances in mm): 38.25, 75.75, 150.75, 188.25, 225.75, 300.75, 338.25, 450.75, 488.25, 525.75, 600.75, 675.75, 825.75, 975.75, 1125.75, 1275.75 and 1350.75.

The recipe used in this example relates to the manufacture of a semi-hard cheese of the type Danbo 45+.

The cheese milk used originated from cow's milk. The raw cow's milk was subjected to a pasteurisation at 72.5 °C for 15 seconds. Subsequently the milk was subjected to a centrifugation and a Bactofugation. Then whey cream (100 1, 14%) was added to 14,000 1 of this cheese milk. The fat content in the cheese milk so obtained was 2.85%. The protein content in the cheese milk so obtained was 3.33%.

The steps performed in the curd forming process comprised the following: loading the vat, stirring, addition of culture, stirring, addition of rennet, cutting, coagulation time, cutting, stirring, cutting, rest, first draining of whey, cutting, stirring, adding process water, stirring, rest, second draining of whey, cutting, stirring draining.

The process steps, materials used, volumes, times, temperature etc. were identical in the two experiments.

The quality of the curd forming process as expressed in reduction of loss of fat into the whey and as expressed in reduction of amount of fines produced was assessed on the basis on the whey obtained.

The analysis in respect of "Amount of fines" and "Loss of fat" respectively were performed as set out below:

### Determination of amount of fines

Curd fines were defined as particle of curd which passed a filter having a mesh size below 1 mm.

One whey samples of 11 was taking from the whey drained off. One analysis test was performed in respect of this whey sample. The analysis method performed on this sample was: Imhof, 40 min settling. The result of this test method is expressed in ml/1000 ml.

### Determination of loss of fat

One whey samples of 11 was taking from the whey drained off. One analysis test was performed in respect of this whey sample. The analysis method performed on this sample was: Fat analysis in whey according to a Milko Scan. The result of this test method is expressed in %.

### Test result

In Experiment 2, the improved performance compared to Experiment 1 corresponded to a reduction of loss of fat of 7%.

In Experiment 2, the improved performance compared to Experiment 1 corresponded to a reduction of loss of fines into the whey of 20%.

Accordingly, this example shows that an improved performance of the cheese curd forming process of a cheese manufacturing process can be obtained by optimizing the configuration of the longitudinal knives in a cutting frame of a curd vat.

For this reason the possibility of having full flexibility in terms of the number of longitudinal knives as well as the distribution or density of these longitudinal knives at various positions of the openings in the frame girders of the cutting frame in a curd vat is highly desirable.

## Claims

1. A cutting frame (2) for use in a curd vat, said cutting frame comprising:
one or more exchangeable longitudinal knives (4) each having a first end (6) and a second end (8); and
a support frame (10) for accommodating said one or more exchangeable longitudinal knives;
said support frame (10) comprising:
a first transverse frame girder (12); and
a second transverse frame girder (14); and
at least one longitudinal frame girder (16) having two opposite ends (18,20); said at least one longitudinal frame girder at one of said ends (18,20) connecting the first transverse frame girder (12); and said at least one longitudinal frame girder at another of said ends (18,20) connecting the second transverse frame girder (14);
wherein the first transverse frame girder (12) as well as the second transverse frame girder (14) comprise one or more openings (22a,22b), wherein said at least one opening (22a) in the first transverse frame girder (12) on the one hand, and wherein said at least one opening (22b) in the second transverse frame girder (14) on the other hand together in pairs provides for accommodation of one of said exchangeable longitudinal knives (4);
wherein at least one of said one or more exchangeable longitudinal knives (4) comprises a first knife locking means (24) for releasable locking said one or more exchangeable longitudinal knives (4) into a locked position onto said support frame (10);
wherein said support frame comprises second knife locking means (26) for releasable locking said one or more exchangeable longitudinal knives (4) into a locked position onto said frame by engagement of said first knife locking means (24) of said one or more exchangeable longitudinal knives (4) with said second knife locking means (26) of said frame (10); wherein said cutting frame allows altering the number of exchangeable longitudinal knives as well as the distribution or density of said knives at various positions alongside said frame girders.
**characterised in that** said one or more exchangeable longitudinal knives (4) have a thickness of 1.5 - 5 mm and **in that** said one or more longitudinal exchangeable knives (4) are essentially straight having no U-shaped bends;

2. A cutting frame according to claim 1, wherein said cutting frame (2) comprises driveshaft fastening means for fixing said cutting frame to a driveshaft (28).

3. A cutting frame according to claim 2, wherein said driveshaft fastening means are arranged on said cutting frame (2) in an arrangement which provides for said driveshaft being fixed to said cutting frame in an orientation which is essentially parallel to said one or more exchangeable longitudinal knives (4), when said knives are locked into a locked position onto said support frame (10).

4. A cutting frame according to any of the claims 1 - 3, wherein said first knife locking means is arranged in the vicinity of said first end (6) or said second end (8) of said exchangeable longitudinal knives (4).

5. A cutting frame according to any of the claims 1 - 4 furthermore comprising one or more fixed longitudinal knives (30), wherein said one or more fixed longitudinal knives (30) are arranged between said first transverse frame girder (12) and said second transverse frame girder (14) in a longitudinal direction; and wherein said one or more fixed longitudinal knives (30) are fixed to said first transverse frame girder (12) and said second transverse frame girder (14) e.g. by welding.

6. A cutting frame according to any of the claims 1 - 5, furthermore comprising one or more fixed transverse knives (32), wherein said one or more fixed transverse knives (32) are arranged between said first transverse frame girder (12) and said second transverse frame girder (14) in a transverse direction; and wherein said one or more fixed transverse knives are fixed to said longitudinal frame girder e.g. by welding; wherein said one or more fixed transverse knives comprise one or more openings (34) for accommodating one or more of said exchangeable longitudinal knives (4), said one or more openings (34) of said one or more fixed transverse knives (32) each being located at positions defined by a line extending between a pair of corresponding two openings (22a,22b) in the first transverse frame girder (12), and the second transverse frame girder (14) respectively.

7. A cutting frame according to claim 6 wherein said one or more openings (34) of said one or more fixed transverse knives (32) is/are each in the form of a slots extending to an edge (36) of said one or more fixed transverse knives.

8. A cutting frame according to claim 7, wherein said one or more openings (34) in the form of a slot allows for release of an exchangeable longitudinal knife (4) from said one or more fixed transverse knives (32) by movement thereof in a direction parallel to an x-z-plane.

9. A cutting frame according to any of the claims 6 -8, wherein said first transverse frame girder (12) and/or said second transverse frame girder (14) and/or one or more of said one or more fixed transverse knives (32) have a declined orientation.

10. A cutting device (100) for use in a curd vat, said cutting device comprising one or more cutting frames (2) according to any of the claims 1 - 9; said cutting device further comprising a drive shaft (28); wherein said one or more cutting frames are fixed to said drive shaft.

11. A cutting device according to claim 10, wherein said drive shaft (28) is essentially parallel to the orientation of said one or more of exchangeable longitudinal knives (4) when said knives are locked into a locked position onto said support frame (10).

12. A curd vat comprising a cutting frame according to any of the claims 1 - 9 and/or comprising a cutting device according to claim 10 or 11.

13. A curd vat according to claim 12, wherein said curd vat is of the type selected from the group comprising: a single shaft horizontal vat, a multiple shaft horizontal vat, a single shaft vertical vat and a multiple shaft vertical vat.

14. A curd vat according to claim 12 or 13, wherein said curd vat having a dish- shaped bottom, such as a bottom having a spherical shape.

15. Use of a cutting frame (2) according to any of the claims 1 - 9 or a cutting device (100) according to claim 10 or 11, or a curd vat (200) according to any of the claims 12 - 14 in a cheese manufacturing process.

## Patentansprüche

1. Schneiderahmen (2) zur Verwendung in einer Käsebruchwanne, wobei der Schneiderahmen Folgendes umfasst:
ein oder mehrere austauschbare Längsmesser (4), von denen jedes ein erstes Ende (6) und ein zweites Ende (8) hat; und
einen Halterungsrahmen (10) zur Aufnahme des einen oder der mehreren austauschbaren Längsmesser;
wobei der Halterungsrahmen (10) Folgendes umfasst:
einen ersten querlaufenden Rahmenträger (12); und
einen zweiten querlaufenden Rahmenträger (14); und
wenigstens einen längslaufenden Rahmenträger (16), der zwei entgegengesetzte Enden (18, 20) hat; wobei der wenigstens eine längslaufende Rahmenträger an einem der Enden (18, 20) mit dem ersten querlaufenden Rahmenträger (12) verbunden ist; und wobei der wenigstens eine längslaufende Rahmenträger an einem anderen der Enden (18, 20) mit dem zweiten querlaufenden Rahmenträger (14) verbunden ist;
wobei der erste querlaufende Rahmenträger (12) sowie der zweite querlaufende Rahmenträger (14) eine oder mehrere Öffnungen (22a, 22b) umfasst, wobei die wenigstens eine Öffnung (22a) im ersten querlaufenden Rahmenträger (12) einerseits und wobei die wenigstens eine Öffnung (22b) im zweiten querlaufenden Rahmenträger (14) andererseits zusammen und paarweise eine Aufnahme für eines der austauschbaren Längsmesser (4) bereitstellen;
wobei wenigstens eines von dem einen oder den mehreren austauschbaren Längsmessern (4) ein erstes Messer-Verriegelungsmittel (24) umfasst, um das eine oder die mehreren austauschbaren Längsmesser (4) in einer verriegelten Position auf dem Halterungsrahmen (10) freigebbar zu verriegeln;
wobei der Halterungsrahmen zweite Messer-Verriegelungsmittel (26) umfasst, um das eine oder die mehreren austauschbaren Längsmesser (4) in einer verriegelten Position auf dem Rahmen freigebbar zu verriegeln, und dies durch den Eingriff des ersten Messer-Verriegelungsmittels (24) des einen oder der mehreren austauschbaren Längsmesser (4) mit den zweiten Messer-Verriegelungsmitteln (26) des Rahmens (10);
wobei der Schneiderahmen die Veränderung der Zahl an austauschbaren Längsmessern sowie der Verteilung oder Dichte dieser Messer an verschiedenen Positionen entlang der Rahmenträger gestattet,
**dadurch gekennzeichnet, dass** das eine oder die mehreren austauschbaren Längsmesser (4) eine Dicke von 1,5 bis 5 mm haben und dass das eine oder die mehreren austauschbaren Längsmesser (4) im Wesentlichen gerade sind und keine U-förmigen Krümmungen haben.

2. Schneiderahmen nach Anspruch 1, wobei der Schneiderahmen (2) Antriebswellen-Befestigungsmittel umfasst, um den Schneiderahmen an einer Antriebswelle (28) zu befestigen.

3. Schneiderahmen nach Anspruch 2, wobei die Antriebswellen-Befestigungsmittel auf dem Schneidrahmen (2) angeordnet sind, und dies in einer Anordnung, die es gestattet, die Antriebswelle am Schneidrahmen in einer Ausrichtung zu befestigen, die im Wesentlichen parallel zu dem einen oder den mehreren austauschbaren Längsmessern (4) ist, wenn die Messer in einer verriegelten Position auf dem Halterungsrahmen (10) verriegelt sind.

4. Schneiderahmen nach einem der Ansprüche 1 bis 3, wobei das erste Messer-Verriegelungsmittel in der Nähe des ersten Endes (6) oder des zweiten Endes (8) der austauschbaren Längsmesser (4) angeordnet ist.

5. Schneiderahmen nach einem der Ansprüche 1 bis 4, der außerdem ein oder mehrere feststehende Längsmesser (30) umfasst, wobei das eine oder die mehreren feststehenden Längsmesser (30) zwischen dem ersten querlaufenden Rahmenträger (12) und dem zweiten querlaufenden Rahmenträger (14) in einer Längsrichtung angeordnet sind; und wobei das eine oder die mehreren feststehenden Längsmesser (30) an dem ersten querlaufenden Rahmenträger (12) und dem zweiten querlaufenden Rahmenträger (14) befestigt sind, beispielsweise durch Schweißen.

6. Schneiderahmen nach einem der Ansprüche 1 bis 5, der außerdem ein oder mehrere feststehende Quermesser (32) umfasst, wobei das eine oder die mehreren feststehenden Quermesser (32) zwischen dem ersten querlaufenden Rahmenträger (12) und dem zweiten querlaufenden Rahmenträger (14) in einer Querrichtung angeordnet sind; und wobei das eine oder die mehreren feststehenden Quermesser an dem längslaufenden Rahmenträger befestigt sind, beispielsweise durch Schweißen; wobei das eine oder die mehreren feststehenden Quermesser eine oder mehrere Öffnungen (34) zur Aufnahme eines oder mehrerer der austauschbaren Längsmesser (4) umfasst, wobei von der einen oder den mehreren Öffnungen (34) des einen oder der mehreren feststehenden Quermesser (32) jede sich an einer Position befindet, die durch eine Linie definiert wird, die sich zwischen einem Paar von zusammengehörenden zwei Öffnungen (22a, 22b) in dem ersten querlaufenden Rahmenträger (12) bzw. dem zweiten querlaufenden Rahmenträger (14) erstreckt.

7. Schneiderahmen nach Anspruch 6, wobei von der einen oder den mehreren Öffnungen (34) des einen oder der mehreren feststehenden Quermesser (32) jede die Form eines Schlitzes hat, der sich bis zu einem Rand (36) des einen oder der mehreren feststehenden Quermesser erstreckt.

8. Schneiderahmen nach Anspruch 7, wobei die eine oder mehreren Öffnungen (34) in Schlitzform die Freigabe eines austauschbaren Längsmessers (4) aus dem einen oder den mehreren feststehenden Quermessern (32) gestatten, und dies durch eine Bewegung von diesem in einer Richtung parallel zu einer x-z-Ebene.

9. Schneiderahmen nach einem der Ansprüche 6 bis 8, wobei der erste querlaufende Rahmenträger (12) und/oder der zweite querlaufende Rahmenträger (14) und/oder eines oder mehrere von dem einen oder den mehreren feststehenden Quermessern (32) eine schräge Ausrichtung haben.

10. Schneidevorrichtung (100) zur Verwendung in einer Käsebruchwanne, wobei die Schneidevorrichtung einen oder mehrere Schneiderahmen (2) nach einem der Ansprüche 1 bis 9 umfasst; wobei die Schneidevorrichtung außerdem eine Antriebswelle (28) umfasst; wobei der eine oder die mehreren Schneiderahmen an der Antriebswelle befestigt sind.

11. Schneidevorrichtung nach Anspruch 10, wobei die Antriebswelle (28) im Wesentlichen parallel zur Ausrichtung des einen oder der mehreren austauschbaren Längsmesser (4) verläuft, wenn diese Messer in einer verriegelten Position auf dem Halterungsrahmen (10) verriegelt sind.

12. Käsebruchwanne, die einen Schneiderahmen nach einem der Ansprüche 1 bis 9 umfasst und/oder die eine Schneidevorrichtung nach Anspruch 10 oder 11 umfasst.

13. Käsebruchwanne nach Anspruch 12, wobei die Käsebruchwanne von einem Typ ist, der aus der folgenden Gruppe gewählt ist: eine horizontale Wanne mit einer Welle, eine horizontale Wanne mit mehreren Wellen, eine vertikale Wanne mit einer Welle, eine vertikale Wanne mit mehreren Wellen.

14. Käsebruchwanne nach Anspruch 12 oder 13, wobei die Käsebruchwanne einen schalenförmigen Boden hat, wie etwa einen Boden, der kugelförmig ist.

15. Verwendung eines Schneiderahmens (2) nach einem der Ansprüche 1 bis 9 oder einer Schneidevorrichtung (100) nach Anspruch 10 oder 11 oder einer Käsebruchwanne (200) nach einem der Ansprüche 12 bis 14 in einem Prozess zur Käseherstellung.

## Revendications

1. Cadre de découpe (2) destiné à être utilisé dans une cuve pour le caillé, ledit cadre de découpe comprenant :
une ou plusieurs lames longitudinales échangeables (4) ayant chacune une première extrémité (6) et une seconde extrémité (8) ; et
un cadre de support (10) pour loger lesdites une ou plusieurs lames longitudinales échangeables ;
ledit cadre de support (10) comprenant :
une première poutre de cadre transversale (12) ; et
une seconde poutre de cadre transversale (14) ; et
au moins une poutre de cadre longitudinale (16) ayant deux extrémités opposées (18, 20) ; ladite au moins une poutre de cadre longitudinale au niveau de l'une desdites extrémités (18, 20) raccordant la première poutre de cadre transversale (12) ; et ladite au moins une poutre de cadre longitudinale au niveau d'une autre desdites extrémités (18, 20) raccordant la seconde poutre de cadre transversale (14) ;
dans lequel la première poutre de cadre transversale (12) ainsi que la seconde poutre de cadre transversale (14) comprennent une ou plusieurs ouvertures (22a, 22b), dans lequel ladite au moins une ouverture (22a) dans la première poutre de cadre transversale (12) d'une part, et dans lequel ladite au moins une ouverture (22b) dans la seconde poutre de cadre transversale (14) d'autre part, ensemble en paires, fournissent le logement de l'une desdites lames longitudinales échangeables (4) ;
dans lequel au moins l'une desdites une ou plusieurs lames longitudinales échangeables (4) comprend un premier moyen de verrouillage de lame (24) pour verrouiller de manière amovible lesdites une ou plusieurs lames longitudinales échangeables (4) dans une position verrouillée sur ledit cadre de support (10) ;
dans lequel ledit cadre de support comprend des seconds moyens de verrouillage de lame (26) pour verrouiller de manière amovible lesdites une ou plusieurs lames longitudinales échangeables (4) dans une position verrouillée sur ledit cadre par la mise en prise dudit premier moyen de verrouillage de lame (24) desdites une ou plusieurs lames longitudinales échangeables (4) avec ledit second moyen de verrouillage de lame (26) dudit cadre (10) ;
dans lequel ledit cadre de découpe permet de modifier le nombre de lames longitudinales échangeables ainsi que la distribution ou la densité desdites lames à différentes positions le long desdites poutres de cadre ;
**caractérisé en ce que** lesdites une ou plusieurs lames longitudinales échangeables (4) ont une épaisseur de 1,5 - 5 mm et **en ce que** lesdites une ou plusieurs lames longitudinales échangeables (4) sont essentiellement droites sans coudes en forme de U.

2. Cadre de découpe selon la revendication 1, dans lequel ledit cadre de découpe (2) comprend des moyens de fixation d'arbre d'entraînement pour fixer ledit cadre de découpe sur un arbre d'entraînement (28).

3. Cadre de découpe selon la revendication 2, dans lequel lesdits moyens de fixation d'arbre d'entraînement sont agencés sur ledit cadre de découpe (2) dans un agencement qui fournit ledit arbre d'entraînement qui est fixé sur ledit cadre de découpe dans une orientation qui est essentiellement parallèle auxdites une ou plusieurs lames longitudinales échangeables (4), lorsque lesdites lames sont verrouillées dans une position verrouillée sur ledit cadre de support (10).

4. Cadre de découpe selon l'une quelconque des revendications 1 à 3, dans lequel ledit premier moyen de verrouillage de lame est agencé à proximité de ladite première extrémité (6) ou ladite seconde extrémité (8) desdites lames longitudinales échangeables (4).

5. Cadre de découpe selon l'une quelconque des revendications 1 à 4, comprenant en outre une ou plusieurs lames longitudinales fixes (30), dans lequel lesdites une ou plusieurs lames longitudinales fixes (30) sont agencées entre ladite première poutre de cadre transversale (12) et ladite seconde poutre de cadre transversale (14) dans une direction longitudinale ; et dans lequel lesdites une ou plusieurs lames longitudinales fixes (30) sont fixées sur ladite première poutre de cadre transversale (12) et ladite seconde poutre de cadre transversale (14) par exemple, par soudage.

6. Cadre de découpe selon l'une quelconque des revendications 1 à 5, comprenant en outre une ou plusieurs lames transversales fixes (32), dans lequel lesdites une ou plusieurs lames transversales fixes (32) sont agencées entre ladite première poutre de cadre transversale (12) et ladite seconde poutre de cadre transversale (14) dans une direction transversale ; et dans lequel lesdites une ou plusieurs lames transversales sont fixées sur ladite poutre de cadre longitudinale, par exemple par soudage ; dans lequel lesdites une ou plusieurs lames transversales fixes comprennent une ou plusieurs ouvertures (34) pour loger une ou plusieurs desdites lames longitudinales échangeables (4), lesdites une ou plusieurs ouvertures (34) desdites une ou plusieurs lames transversales fixes (32) étant chacune positionnées dans des positions définies par une ligne s'étendant entre une paire de deux ouvertures (22a, 22b) correspondantes dans la première poutre de cadre transversale (12), et la seconde poutre de cadre transversale (14) respectivement.

7. Cadre de découpe selon la revendication 6, dans lequel lesdites une ou plusieurs ouvertures (34) desdites une ou plusieurs lames transversales fixes (32) se présente / se présentent chacune sous la forme d'une fente s'étendant vers un bord (36) desdites une ou plusieurs lames transversales fixes.

8. Cadre de découpe selon la revendication 7, dans lequel lesdites une ou plusieurs ouvertures (34) se présentant sous la forme d'une fente permettent la libération d'une lame longitudinale échangeable (4) desdites une ou plusieurs lames transversales fixes (32) par leur déplacement dans une direction parallèle à un plan x-z.

9. Cadre de découpe selon l'une quelconque des revendications 6 à 8, dans lequel ladite première poutre de cadre transversale (12) et/ou ladite seconde poutre de cadre transversale (14) et/ou une ou plusieurs desdites une ou plusieurs lames transversales fixes (32) ont une orientation en déclin.

10. Dispositif de découpe (100) destiné à être utilisé dans une cuve pour le caillé, ledit dispositif de découpe comprenant un ou plusieurs cadres de découpe (2) selon l'une quelconque des revendications 1 à 9 ; ledit dispositif de découpe comprenant en outre un arbre d'entraînement (28) ; dans lequel lesdits un ou plusieurs cadres de découpe sont fixés sur ledit arbre d'entraînement.

11. Dispositif de découpe selon la revendication 10, dans lequel ledit arbre d'entraînement (28) est essentiellement parallèle à l'orientation desdites une ou plusieurs lames longitudinales échangeables (4) lorsque lesdites lames sont verrouillées dans une position verrouillée sur ledit cadre de support (10).

12. Cuve pour le caillé comprenant un cadre de découpe selon l'une quelconque des revendications 1 à 9 et/ou comprenant un dispositif de découpe selon la revendication 10 ou 11.

13. Cuve pour le caillé selon la revendication 12, dans laquelle ladite cuve pour le caillé est du type choisi dans le groupe comprenant : une cuve horizontale à arbre unique, une cuve horizontale à plusieurs arbres, une cuve verticale à arbre unique et une cuve verticale à plusieurs arbres.

14. Cuve pour le caillé selon la revendication 12 ou 13, dans laquelle ladite cuve pour le caillé ayant un fond en forme de plat, tel qu'un fond ayant une forme sphérique.

15. Utilisation d'un cadre de découpe (2) selon l'une quelconque des revendications 1 à 9 ou d'un dispositif de découpe (100) selon la revendication 10 ou 11 ou d'une cuve pour le caillé (200) selon l'une quelconque des revendications 12 à 14, dans un procédé de fabrication de fromage.
